(19) Europäisches Patentamt
European Patent Office
Office européen des brevets

(11) EP 0 940 974 A2

(12) EUROPEAN PATENT APPLICATION

(43) Date of publication:
08.09.1999 Bulletin 1999/36

(21) Application number: 99301292.1

(22) Date of filing: 23.02.1999

(51) Int Cl.6: H04N 1/50, H04N 1/52, G03F 3/10, G03C 7/30, G03C 5/08

(84) Designated Contracting States:
AT BE CH CY DE DK ES FI FR GB GR IE IT LI LU MC NL PT SE
Designated Extension States:
AL LT LV MK RO SI

(30) Priority: 26.02.1998 JP 4536398

(71) Applicant: KONICA CORPORATION
Tokyo (JP)

(72) Inventors:
- Tosaka, Yasuo
  Odawara-shi, Kanagawa-ken (JP)
- Masumi, Satoshi
  Odawara-shi, Kanagawa-ken (JP)

(74) Representative: Rees, Alexander Ellison et al
Urquhart-Dykes & Lord
91 Wimpole Street
London W1M 8AH (GB)

# (54) Laser exposure apparatus and image forming apparatus

(57) A laser exposure apparatus is disclosed, comprising at least three laser light source units outputting laser lights having different wavelength, at least one of the laser light source units comprising plural laser oscillators each outputting a laser light having the same wavelength, and laser light exposure being so controlled that the ratio of an exposure output of a laser light source unit outputting a laser light having the shortest wavelength to that of a laser light source unit outputting a laser light having the longest wavelength units being from 1/10000 to 1/10 and the beam diameter of the laser light of the longest wavelength is from 3 to 25 μm on the exposed surface.

FIG. 1

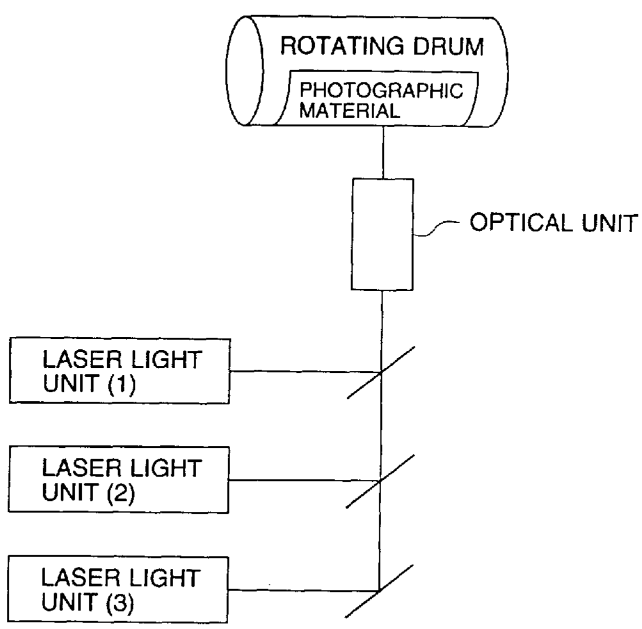


EP 0 940 974 A2

## Description

## FIELD OF THE INVENTION

The present invention relates to a laser exposure apparatus, an image forming apparatus, a roomlight-handling cartridge and a silver halide light sensitive photographic material, each of which is used for color images, and in particular to a laser exposure apparatus, an image forming apparatus, a roomlight-handling cartridge and a silver halide light sensitive photographic material, each of which is capable of forming color images favorably used in proofing which is made through scanning exposure from image information obtained through color separation and halftone dot image conversion in the process of color plate-making and printing.

## BACKGROUND OF THE INVENTION

As a method for preparing, in the process of color plate-making and printing, a color proof from plural black-and-white halftone dot images obtained through color separation and halftone dot image conversion was disclosed a method for preparing a color proof by the use of a silver halide color photographic material in JP-A 56-113139, 56-104335, 62-280746, 62-280747, 62-280748, 62-280749 and 62-280750 (herein, the term "JP-A" means an unexamined and published Japanese Patent Application).

Recently, there has been increasingly employed a plate-making method in which images are converted to digital signals, after which image editing is carried out with a computer without the use of the above-mentioned black-and-white halftone dot images formed on photographic film. Digitization of image information enables image processing, rapidly transmitting images without regard to distance and promptly editing images by varying image lay-out and color tone.

As a method for outputting the thus edited images in the form of a color proof is known a method of subjecting color paper to scanning exposure with laser beams. This method, however, has various problems in practical use. In cases where a proof for use in printing is outputted, for example, it is necessary to output in a relatively large area, so that a long time is required for completion of the scanning exposure, markedly lowering productivity.

A technique of simultaneously irradiating plural laser beam spots on the silver halide photographic material by using plural lasers of the same wavelength was employed to enhance exposure productivity. However, this also led to problems such that even if the kind of laser light sources are identical, there was in reality slight deviation in oscillation wavelength among the laser light sources, or when the temperature of a laser oscillator varied, the oscillation wavelength also varied or the intensity was not uniform enough so that it became very complex to adjust the exposure apparatus, causing fluctuations in final quality in the market.

In addition, when an apparatus capable of scanning-exposure used for large-format color prints or color proofs is constructed, it is a rather large device, resulting in a disadvantage in cases where space is limited, and therefore it often is not employed. To compensate for this disadvantage was proposed a method in which a silver halide photographic material is wound around a rotating drum and subjected to laser scanning-exposure while rotating. Even in this method, however, when exposure is made for a high definition image or the rotation rate of the drum is increased to enhance productivity, there often results non-uniformity in images. Specifically in cases when outputting half-tone dot images through exposure, occurrence of non-uniformity of images is an obvious fatal flaw. Further, the acceptable problem occurs that when plural identical image are outputted, different final images are formed.

JP-A 4-330437 discloses an exposure method of a silver halide photographic material in which scanning-exposure is made with a semiconductor laser. However, there is not described anything with respect to problems occurring with regard to the rotation drum or half-tone dot image formation.

## SUMMARY OF THE INVENTION

An object of the present invention is to provide a laser exposure apparatus, an image forming apparatus, a roomlight-handling cartridge and a silver halide light sensitive photographic material, which are each capable of producing color images at high productivity and superior stability, as well as consistent image uniformity.

Another object of the present invention is to provide a laser exposure apparatus, an image forming apparatus, a roomlight-handling cartridge and a silver halide light sensitive photographic material, which are each capable of forming favorably color images used in proofing in which superior half-tone dot images are obtained with consistent image uniformity and which are made through scanning exposure from image information obtained through color separation and halftone dot image conversion, used in color plate-making and printing.

The above objects of the present invention can be accomplished by the following constitution:

1. a laser exposure apparatus, which comprises at least three laser light source units each outputting a laser light

having a wavelength different from the others, at least one of the laser light source units comprising plural laser oscillators outputting a laser light having the same wavelength, and laser light exposure being so controlled that the ratio of an exposure output of a laser light source unit outputting a laser light having the shortest wavelength to that of a laser light source unit outputting a laser light having the longest wavelength units being from 1/10000 to 1/10 and the beam diameter of the laser light of the longest wavelength is from 3 to 25 μm on the exposed surface; and

2. an apparatus for forming an image by a process comprising:

(i) pulling out a silver halide light sensitive photographic material, which is wound in a roll form and contained in a roomlight cartridge, from the cartridge to cut to a prescribed length,
(ii) allowing the cut photographic material to be wound around a rotating drum and exposing the photographic material to laser light with rotating the drum in a laser exposure apparatus and
(iii) subjecting the exposed photographic material to processing to form a color image,

wherein said exposure apparatus comprises at least three laser light source units, each light having a different wavelength from the others; at least one of the laser light source units comprising plural laser oscillators outputting a laser light of the same wavelength, said image forming apparatus having a mechanism for reading information provided to the cartridge to automatically identify the kind of the photographic material or determine exposure conditions or processing conditions.

## BRIEF EXPLANATION OF THE DRAWING

Fig. 1 is a conceptual illustration of an exposure apparatus to which one embodiment of the exposure apparatus used in the invention is applicable.
Fig. 2 is a conceptual illustration of a laser light source unit applicable in the invention.
Fig. 3 is a conceptual illustration of an image forming apparatus relating to the invention.

## DETAILED DESCRIPTION OF THE INVENTION

The exposure apparatus used in the invention is comprised of at least three laser light source units, which output laser lights each having a wavelength different from the others. Herein, the laser light source unit refers to a unit constituting a laser light source outputting a laser light having a specified wavelength. The laser light source is comprised of one or more laser oscillators. In one case, a laser oscillator corresponding to a laser light source of a specified wavelength may be single. In another case, plural laser oscillators may concurrently function as an image-exposing light source at a specified wavelength. The three laser light source units described above each output a laser light different in wavelength ( or oscillation wavelength) from the others and each oscillation wavelength is at least 30 nm, and more preferably at least 50 nm different than each of the others.
In at least one laser light source unit used in the invention, plural laser beam spots are simultaneously irradiated onto a silver halide light sensitive photographic material using plural laser oscillators outputting a laser light of the same wavelength. The expression "plural" means two or more, and specifically 2 to 500 beams. Two to 30 beams are preferred in practical use, such that the number of the beams is optionally selected in terms of optimal productivity.
The number of the laser light source unit comprised of plural laser oscillators used in the invention is to be at least one, preferably three, and more preferably, all the laser light units being comprised of plural laser oscillators. Arrangement of the plural laser lights to produce plural beam spots enables plural spots to be simultaneously exposed in the drum-rotating system, enhancing productivity of exposure. In cases where a laser light of high intensity is employed by separating the laser light into plural beams, the wavelength and intensity of each beam is essentially dependent on variation of the laser light source so that the problems to be solved in the invention do not become major defects. In cases where all of the laser light units are each comprised of a single laser oscillator, the problems to be solved in the invention do not become major defects.
In the invention, the diameter of the laser beam is preferably not more than 25 μm. Specifically, exposure of the laser light of the longest wavelength is controlled so that the laser beam diameter is within the range of 3 to 25 μm. Specifically, the diameter of an infrared laser beam used in the invention is not more than 25 μm, preferably 3 to 25 μm, and more preferably 6 to 22 μm. A beam diameter of less than 3 μm may be favorable in terms of image quality, but it can make adjustment difficult or can lower the processing speed. When scanning-exposure is run on a high speed-rotating drum, a beam diameter of more than 25 μm, specifically of the infrared laser, reduces uniformity and deteriorates image sharpness. Limiting the beam diameter to the range described above enables uniform, highly definite images. Nothing is described in JP-A 4-330437 with respect to such problems on a rotating drum. According to the invention, writing-in of uniform, highly definite images with an infrared laser at high speed is achieved at high

productivity.

In this invention, the expression "having the same wavelength" means that the difference in wavelength between laser lights is within 10 nm. Although the wavelength of the laser light varies with environmental factors such as temperature and operating conditions, when measured under the same environmental conditions, the wavelength difference is to be not more than 10 nm.

The exposure apparatus used in the invention comprises at least three laser light source units and each light having wavelengths different from the others. Among the laser light source units, the ratio of the exposure output (or exposing light output) of a laser light source unit outputting a laser light having the shortest wavelength (herein, denoted as "Fs") to that of a laser light source unit outputting a laser light having the longest wavelength (Fl), i.e., the output ratio of Fs/Fl is so controlled to be not less than 1/10000 and not more than 1/10, and preferably not more than 1/20, and more preferably not more than 1/50. In cases of the output ratio being less than 1/10000, a problem occurs such that sufficiently high sensitivity of an emulsion which is sensitive at shorter wavelengths has not been achieved.

In silver halide photographic materials, image formation is achieved by employing variation of the image density in relation to exposure. The laser light is imagewise irradiated onto the photographic material to form photographic images. In this case, the image density is varied by modulating the laser light output in response to image information to form desired images. In cases where a negative-type photographic material is employed, for example, the output corresponding to the minimum image density is to be the minimum output and the output corresponding to the maximum image density is to be the maximum output; therefore, image densities can be controlled by controlling the output between the maximum and minimum densities. The exposure output of a laser light source unit according to the invention is to be the maximum output value among the exposing laser light output range necessary to control the image densities. In cases where a positive-type photographic material is employed, for example, as an exposing light output of a laser light source unit increases, the resulting image density decreasingly varies from the maximum density to reach the minimum density. In this case, the exposure output exhibiting the minimum density is to be the exposure output of a laser light source unit according to the invention. Exemplarily, when the maximum and minimum densities are obtained at 0.3 mW and 5 mW, respectively, image exposure is performed by varying the exposing light output between 0.3 mW and 5 mW, and the exposure output of a laser light source unit as defined in the invention is to be 5 mW. The exposure output is variable, depending on photographic characteristics of a photographic material such as sensitivity, conditions of the exposure apparatus such as a scanning speed, the desired image density range and the like.

In cases when a silver halide photographic material is subjected to scanning-exposure, the silver halide photographic material is set by allowing it to be wound around a rotating drum, after which laser exposure is performed based on image information synchronized with rotation of the drum. The diameter of the rotating drum can be optionally set up to meet the size of the photographic material. The rotation speed of the drum can also be optionally set up and suitably selected taking account of the laser beam diameter, the energy intensity of laser light, the laser light writing-in pattern, the sensitivity of the photographic material, and so on. Scanning-exposure at a higher rotation speed is preferable in terms of productivity. Concretely, 200 to 300 rotations per minute is preferred. The photographic material can be fixed onto the drum by any common mechanical means. Alternatively, provided on the drum surface can be a large number of fine holes used for suction in accordance with the photographic material size and the photographic material is brought into close contact with the drum. To prevent trouble such as uneven images, the photographic material needs to be fixed so as to be brought into contact with the drum as closely as possible.

Various lasers known in the art can be used for exposing the photographic material. High output can be obtained with gas laser, but the required apparatus is large and expensive and a modulator is also needed. On the contrary, semiconductor lasers have advantages such as compactness, relatively low in price and long life-time. Semiconductor lasers having a oscillation wavelength in the range of visible region to infrared region are available. Exemplary examples of gas lasers include helium-cadmium laser (441.6 nm), argon ion laser (514.4 nm) and helium-neon laser (632.8 nm). Examples of the semiconductor laser include AlGaInAs (670 nm), GaAlAs (750 nm) and GaAlAs (760 to 850 nm).

The exposure apparatus used in the invention is favorably used in exposure for large format prints and color proofs. In one preferred embodiment of the invention, a silver halide photographic material is wound in a roll form and contained in a room light-proof cartridge, thereby enabling handling under ambient light. This cartridge is loaded in the exposure apparatus, in which the photographic material is pulled out from the cartridge, cut to the desired length, wound around a rotating drum and imagewise exposed to laser light by the use of a laser exposure apparatus with rotating the drum and then the photographic material is further subjected to processing to obtain color images. In this case, the exposure apparatus has a mechanism for reading information provided to the roomlight cartridge, and automatically identifying the kind of the photographic material, , setting exposure conditions, and/or setting processing conditions.

There have been proposed various roomlight cartridges and any one of known roomlight cartridges are usable. Included in the roomlight cartridge used in the invention is a so-called easy-loading type photographic material, in

which the photographic material is shielded from ambient light by covering the periphery of the photographic material roll using a flange with a light-shielding leader and thereby the photographic material can be handled under room light, so that no darkroom is needed by removing the leader after loading in the exposure apparatus and the photographic material roll can easily be loaded into the apparatus. In this case, readable information can be provided to the leader or the flange.

A silver halide light sensitive photographic material comprising a support having thereon at least three silver halide emulsion layers each having a spectral sensitivity different from the others is preferably used in the invention. In this case, when the photographic material is exposed to laser light, at least one of the silver halide emulsion layers preferably contains silver halide emulsion having a spectral sensitivity maximum at a wavelength longer by 2 to 10 nm than the wavelength of the exposing laser light. In cases when the spectral sensitivity maximum is in the range of less than 2 nm longer than the laser-exposing wavelength, variation of laser oscillation wavelength results in increased variation of sensitivity, producing the problem of image stability being reduced. On the other hand, in cases when the spectral sensitivity maximum is in the range of more than 10 nm longer than the laser-exposing wavelength, there is produced the problem of the sensitivity being reduced. The spectral sensitivity maximum can be determined by any conventional method such as wedge spectrograph or sensitometry with a monochromatic light. It is preferred that the wavelength of the spectral sensitivity maximum is longer by 2 to 10 nm than the wavelength of at least one of the three laser light source units. In cases where a laser light source unit is comprised of plural oscillators, the wavelength of the laser light source unit is to be an average value of oscillation wavelengths.

Preferably used in the invention is a silver halide photographic material comprising a support having thereon at least three silver halide emulsion layers each having a spectral sensitivity different from the others. Among these three silver halide emulsion layers, the ratio of the average grain size of the silver halide emulsion layer having a spectral sensitivity at the longest wavelength (denoted as $r_l$) to that of the silver halide emulsion layer having a spectral sensitivity at the shortest wavelength ($r_s$), i.e., $r_l/r_s$ is preferably not less than 1.1 and not more than 2.0. In cases where the ratio is less than 1.1, color separation in laser exposure becomes unacceptable, resulting in color contamination. On the other hand, in cases where the ratio is more than 2.0, the difference in developability between the silver halide emulsion layers increases. Specifically when developing conditions such as the temperature or pH vary, a problem results in which color balance is deteriorated.

As described above, a silver halide photographic material having thereon at least three silver halide emulsion layers having different spectral sensitivities is preferably used. In this case, the reflection density of a raw sample of the photographic material, which is measured with the wavelength of each of at least three laser light source units, is preferably not less than 1.0 and not more than 2.5. When the density is more than 2.5, the sensitivity is markedly reduced.

The silver halide photographic material used in the invention preferably contains a cyan coupler represented by the following formula (I) or (II):

formula (I)

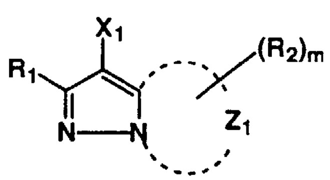

wherein $R_1$ is a hydrogen atom or a substituent; $R_2$ is a substituent; and m is an integer of 0, 1 or 2, provided that when m is 0, $R_1$ is an electron-withdrawing group, when m is 1 or 2, at least one of $R_1$ and $R_2$ is an electron-withdrawing group, and when m is 2, plural m's may be the same of diferent from each other; $Z_1$ is a non-metallic atom group necessary to form a nitrogen containing 5-membered heterocyclic ring, which may be condensed with a benzene ring; and $X_1$ is a hydrogen atom or a group capable of being released upon reaction with an oxidation product of a color developing agent;

formula (II)

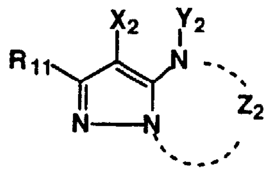

wherein $R_{11}$ and $Y_2$ is a hydrogen atom or a substituent; $X_2$ is a hydrogenatom or a group capable of being released upon reaction with an oxidation product of a color developing agent; $Z_2$ is a nonmetallic atom group capable of forming, with $-N(Y_2)-$ a nirogen containing 6-membered heterocyclic ring, which may be substituted or be condensed with a benzene ring.

In formula (II), the electron-withdrawing group is a substituent having a Hammett's substituent constant ($\sigma p$) of 0.20 or more. Examples thereof include sulfonyl, sulfinyl, sulfonyloxy, sulfamoyl, phospholyl, carbamoyl, acyl, acyloxy, oxycarbonyl, carboxy, cyano, nitro, halogenated alkoxy, halogenated aryloxy, pyrrolyl, tetrazolyl and a halogen atom. Exemplary examples of a sulfonyl group include alkylsulfonyl, arylsulfonyl, halogenated alkylsulfonyl and halogenatedarylsulfonyl. Examples of a sulfinyl group include alkylsufinyl and arylsulfinyl. Examples of a sulfonyloxy group include alkylsulfonyloxy and arylsulfonyloxy. Examples of a sulfamoyl group include N,N-dialkylsulfamoyl, N,N-diarylsulfamoyl and N-alkyl-N-arylsulfamoyl. Examples of a phospholyl group include alkoxyphospholyl, aryloxyphospholyl, alkylphospholyl and arylphospholyl. Examples of a carbamoyl group include N,N-dialkylcarbamoyl, N,N-diaryl carbamoyl and N-alkyl-N-arylcarbamoyl. Examples of a acyl group include alkylcarbonyl and arylcarbonyl. An acyloxy group is preferably an alkylcarbonyloxy group. Examples of an oxycarbonyl group include alkoxycarbonyl and aryloxycarbonyl. A halogenated alkoxy group is preferably $\alpha$-halogenated alkoxy group. Examples of a halogenated aryloxy group include tetrafluoroaryloxy and pentafluoroaryloxy. Examples of a pyrrolyl group include 1-pyllolyl. Examples of a tetrazolyl group include 1-tetrazolyl. In addition to the above groups, trifluoromethyl, heptafluoro-i-propyl, nonylfluoro-t-butyl, tetrafluoroaryl andpentafluoroaryl are also preferable groups.

In formula (I), of the substituents represented by $R_1$ and $R_2$, representative examples of those other than the electron-withdrawing group and group capable of forming a hydrogen bond include an alkyl group, aryl group, anilino group, acylamino group, sulfonamido group, alkylthio group, arylthio group, alkenyl group, cycloalkyl group, cycloalkenyl group, alkynyl group, heterocyclic group, alkoxy group, heterocyclic-oxy group, siloxy group, amino group, alkylamino group, imido group, ureido group, sulfamoylamino group, alkoxycarbonylamino group, aryloxycarbonylamino group, alkoxycarbonyl group, aryloxycarbonyl group, heterocyclic-thio group, thioureido group, hydroxy group, mercapto group, spiro-compound residue and bridged hydrocarbon compound residue.

The alkyl group is preferably one having 1 to 32 carbon atoms, which may be straight-chained or branched. The aryl group is preferably a phenyl group. The acylamino group includes an alkylcarbonylamino group and arylcarbonylamino group. The sulfonamido group includes alkylsulfonylamino group and arylsulfonylamino group. An alkyl or aryl component in the alkylthio group and the arylthio group includes the above-described alkyl group and aryl group. The cycloalkyl group is preferably one having 2 to 32 carbon atoms; and the alkenyl group, which may be straight-chained or branched, is preferably one having 3 to 12 carbon atom and more preferably 5 to 7 carbon atoms. The cycloalkenyl group is preferably one having 3 to 12 carbon atoms and more preferably 5 to 7 carbon atoms. The ureido group includes an alkylureido group and arylureido group; the sulfamoylamino group includes an alkylsulfamoylamino group and arylsulfamoylamino group; the heterocyclic group is preferably 5 to 7-membered one and examples thereof include 2-furyl, 2-thienyl, 2-pyrimidinyl and 2-benzothiazolyl; the heterocyclic-oxy group is preferably 5 to 7-membered one, and examples thereof include 3,4,5,6-tetrahydropiranyl-2-oxy group and 1-phenyltetrazole-5-oxy group; the heterocyclic-thio group is preferably 5 to 7-membered one and examples thereof include 2-pyridylthio, 2-benzothiazolylthio, 2,4-diphenoxy-1,3,5-triazole-6-thio; the siloxy group includes trimethylsiloxy, triethylsiloxy and dimethylbutylsiloxy; the imido group includes succinic acid imido, 3-heptadecylsuccinic acid imido, phthalic acid imido and glutarimido; the spiro-compound residue includes spiro[3,3]heptane-1-yl; and the bridged hydrocarbon compound residue includes bicyclo[2.2.1]heptane-1-yl, tricyclo[3.3.1.1$^{3.7}$]decane-1-yl and 7,7-dimethyl-bicyclo[2.2.1]heptane-1-yl. These groups may be substituted by a group, such as a ballast group including a long-chained hydrocarbon group and polymer residue.

Examples of the group represented by $X_1$ in formula (I), which is capable of being released upon reaction with an oxidation product of a color developing agent, include a halogen atom (e.g., chlorine atom, bromine atom, fluorine atom), an alkoxy group, aryloxy group, heterocyclic-oxy group, , acyloxy group, sulfonyloxy group, group, aryloxycarbonyl group, alkyloxalyloxy group, alkoxyoxalyloxy group, alkylthio group, arylthio group, heterocyclic-thio group, alkyloxythiocarbonylthio group, acylamino group, sulfonamido group, a nitrogen containing heterocyclic group having a bonding site at a nitrogen atom, alkyloxycarbonylamino group, aryloxycarbonylamino group and a group

represented by the following formula:

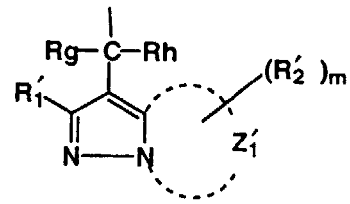

in which $R_1$', $R_2$' and $Z_1$' are each the same as defined in $R_1$, $R_2$ and $Z_1$ described above; Rg and Rh are each a hydrogen atom, alkyl, aryl or a heterocyclic group, and preferanly a hydrogen atom a halogen atom, alkoxy, aryloxy, alkylthio and N-attached nitrogencontaining hetrocyclic group, specifically, examples of the nitrogen containing hetrocyclic group $Z_1$' include a pyrazole ring, an imidazole ring, a benzimidazole ring, a triazole ring and a tetrazole ring.

The compound represented by formula (I) is exemplarily compounds represented by the following formulas (a) to (g):

formula (a)

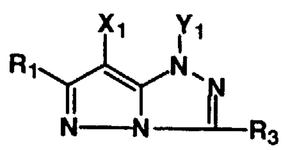

formula (b)

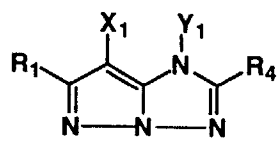

formula (c)

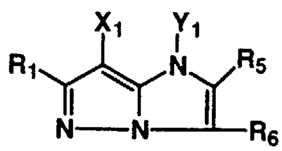

formula (d)

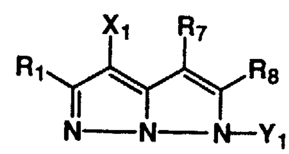

formula (e)

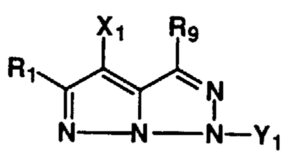

formula (f)

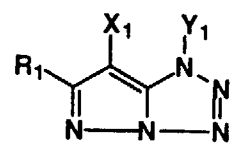

formula (g)

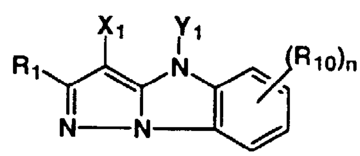

In the above formulas, at least one of $R_1$ and $R_3$ of formula (a), at least one of $R_1$ and $R_4$ of formula (b), at least one of $R_1$, $R_5$ and $R_6$ of formuls (c), at least one of $R_1$, $R_7$ and $R_8$ of formula (d), at least one of $R_1$ and $R_9$, $R_1$ of

formula (f) and at least one of $R_1$ and $R_{10}$ of formula (g) are respectively an electron-withdrawing groups. $X_1$ is the same as defined in $X_1$ of formula (I) and n is an integer of 0 to 4. $Y_1$ is a hydrogen atom or a substituent. This substituent is one capable of leaving from the cyan coupler before the the cyan coupler is reacted with an oxidation product of a color deveeloping agent; and examples thereof include a group capable of leaving under alkaline conditions described in JP-A 61-228444, and a substituent capable of coupling-off upon reaction with an oxidation product of a color developing agent, described in JP-A 56-133734. Of these, preferred $Y_1$ is a hydrogen atom. Further, in formulas (a) to (g), substituentss R1 to R10 other than the electron-withdrawing group are each a hydrogen atom or substituent. The substituent of $R_{10}$ other than an electron-withdrawing group is not specifically limited, and exemplarr examples thereof are those exemplified as R1 and $R_2$ other than electron-withdrawing groups. This cyan coupler having an electron-withdrawing group can be readily synthesized according to the method decribed in JP-A 62-47323, 62-53417, 62-62162, 62-53418, 62-62163, 62-48895 and 62-99950.

The cyan coupler represented by formula (II) has a structure of a heterocyclic 6-membered ring which is condensed with a pyrazole ring. A substituent represented by R11 is not specifically limited, and exemplary examples theeof include alkyl, aryl, anilino, acylamino, sulfonamido, alkylthio, arylthio, alkenyl and cycloalkyl. In addition, a halogen atom, cycloalkenyl, alkynyl, heterocyclic group, sulfonyl, sulfinyl, phosphonyl, acyl, carbamoyl, sulfamoyl, cyano, alkoxy, sulfonyloxy, alkyloxy, heterocyclic-oxy, siloxy, acyloxy, carbamoyloxy, amino, alkylamino, imido, ureido, sulfamoylamino, alkoxycarbonylamino, aryloxycarbonylamino, alkoxycarbonylaryloxycarbonyl, heterocyclic-thio, thioureido, carboxy, hydroxy, mercapto, nitro, sulfo, spiro-compound residue and bridged hydrocarbon compound residue.

The alkyl group represented by $R_{11}$ is preferably one having 1 to 32 carbon atoms, which may be straight-chained or branched. The aryl group represented by $R_{11}$ is a aryl group, and preferably a phenyl group. The acylamino group represented by $R_{11}$ is preferably alkylcarbonylamino and arylcarbonylamino groups. Examples of the sulfonamido group represented by $R_{11}$ include alkylsulfonylamino and arylsulfonylamino. The alkyl component and arylcomponent of the alkylthio and arylthio groups represented by $R_{11}$ are the same as the alkyl and aryl groups $R_{11}$ described above. The alkenyl group represented by $R_{11}$ is one having 2 to 32 carbon atoms, the cycloalkyl group represented by $R_{11}$ is one having 3 to 12 carbon atoms, and preferably 5 to 7 carbon atoms, and the alkenyl group may be straight-chained or branched.The sulfonyl group represented by $R_{11}$ is alkylsulfonyl or arylsulfonyl. The sulfinyl group includes alkylsulfinyl and arylsulfinyl; the phosphonyl group includes alkylphosphonyl, alkoxyphosphonyl, aryloxyphosphonyl and arylphosphonyl;the acyl group includes alkylcarbonyl and arylcarbonyl;the carbamoyl group includes alkylcarbamoyl and arylcarbamoyl;the sulfamoyl group includes alkylsulfamoyl and arylsulfamoyl; the acyloxy group includes alkylcarbonyloxy and arylcarbonyloxy; the carbamoyloxy group includes alkylcarbamoyloxy and arylcarbamoyloxy;the ureido group includes alkylureido and arylureidi; the sulfamoylamino group includes alkylsulfamoylamino and arylsulfamoylamino; the heterocyclic group is preferably 5- to 7-membered ring, including 2-furyl, 2-thienyl, 2-pirimidinyl, 2-benzothiazolyl, 1-pyrrolyl and 1-tetrazolyl; the heterocyclic-oxy group is preferably one having 5- to 7-membered heterocyclic ring, including 3,4,5,6-tetrahydropyranyl-2-oxy and 1-phenyltetrazole-5-oxy; the hetrocyclic-thio group is preferably 5-to 7-membered one, including2-pyridylthio, 2-benzothiazolylthio, and 2,4-diphenoxy-1,3,5-triazole-6-thio; the siloxy group includes trimethylsiloxy, triethylsiloxy and dimethylbutylsiloxy; the imido group includes succinimido, 3-heptadecysuccinimido, phthalimido and glutarimido; the spiro compound residue includes spiro[3.3]heptane-1-yl; and the bridged hydrocarbon compound residue includes bicyclo[2.2.1]heptane-1-yl, tricyclo[3.1.$1^{3.7}$]decane-1-yland 7,7-dimethyl-bicyclo [2.2.1]heptane-1-yl. The groups described above each may contain a substituent including a ballasted group such as long-chained hydrocarbon group or a polymer residue.

Example of the group capable of being released upon reaction with an oxidation product, represented by $X_2$ include a halogen atom (e.g., chlorine, bromine, iodine, etc.), alkoxy, aryloxy, hetrocyclic-oxy, acyloxy, sulfonyloxy, alkoxycarbonyloxy, aryloxycarbonyl, alkyloxalyloxy, alkoxyoxalyloxy, alkylthio, arylthio, heterocyclic-thio, alkyloxythiocarbonylthio, acylamino, sulfonamido, n-attached nitrogen containing heterocyclic group, alkyloxycarbonylamino, aryloxycarbonylamino, carboxyl, and the following group:

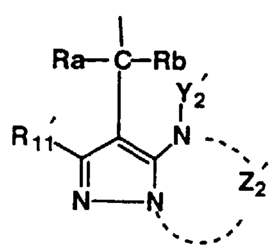

where $R_{11}$' and $Z_2$' are respectively the same as $R_{11}$ and $Z_2$ described above, and Ra and Rb are each a hydrogen atom, alkyl, aryl or a heterocyclic group. Of these, a hydrogen atom, halogen atom, alkoxy, aryloxy, alkylthio, arylthio

and N-attached nitrogen containing heterocyclic group.

The cyan coupler represented by formula (II) is preferably one represented by the following formula (IIa):

formula (IIa)

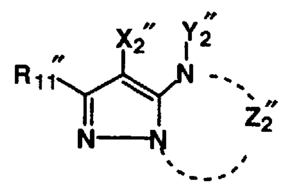

wherein $Z_2$" is a nonmetallic atom group necessary to form a 6-membered nitrogen containing ring containing at least a carbonyl group or at least a sulfonyl group and condesed with a pyrazole ring, and in place of the pyrazole ring, a benzene ring may be condensed; $R_{11}$" and $Y_2$" are each a hydrogen atom or a substituent; and $X_2$" is the same as defined in $X_2$ of formula (II).

In formula (IIa), the 6-membered nitrogen containing heterocyclic ring formed by $Z_2$" is preferably a 6$\pi$-electron system or 8$\pi$-electron system, which contains at least one -N(Y2)- and 1 to 4 nitrogen atoms. The carbonyl group contained in the 6-membered ring is -CO- or -CS, and the sulfonyl group contained in the 6-membered ring is $-SO_2-$. $Y_2$ is a hydrogen atom or a substituent and the substituent represented by $Y_2$ is preferably a group capable of leaving after the compound is reacted with an oxidation product of a developing agent. The substituent represented by $Y_2$ is, for example, a group capable of leaving under the alkaline condition described in 61-228444 or a group capable of coupling-off upon reaction with an oxidation product of a developing agent; and Y2 is preferably a hydrogen atom.

The cyan coupler represented by formula (II) is preferably compounds represented by formulas (A) to (M):

formula (A)

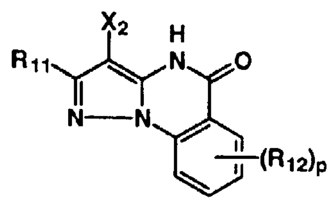

formula (B)

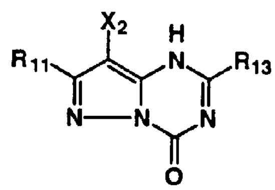

formula (C)

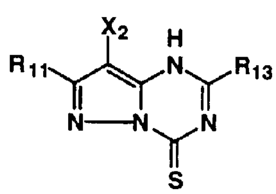

formula (D)

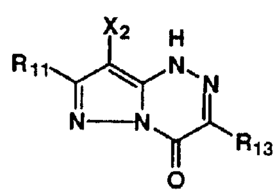

formula (E)

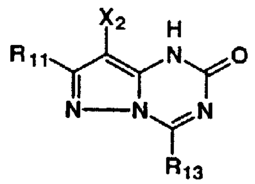

formula (F)

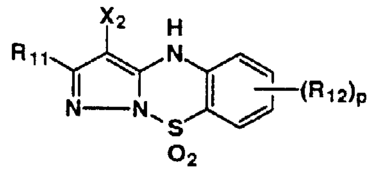

formula (G)

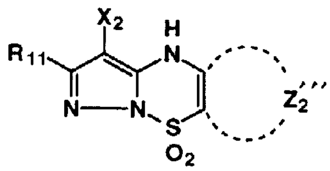

formula (H)

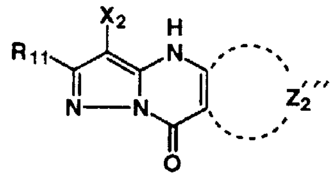

formula (I)

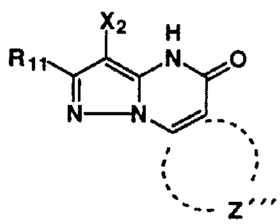

formula (J)

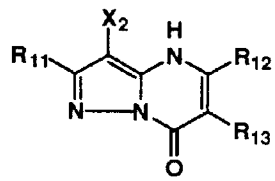

formula (K)

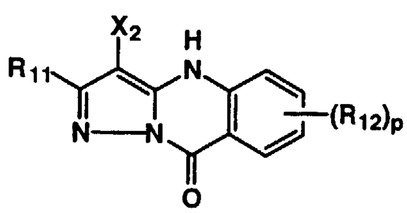

formula (L)

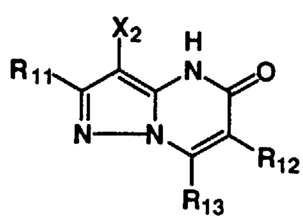

formula (M)

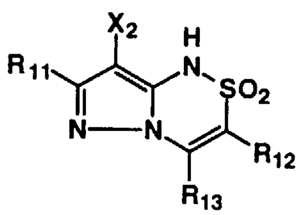

wherein $R_{11}$, $R_{12}$ and $R_{13}$ are the same as $R_{11}$ in formula (II) and $X_2$ is the same as $X_2$ in formula (II). In forulas (A), (F) and (K), p is an integer of 0 to 4 and when p is 2 to 4, plural $R_{12}$'s may be the same or different from the other(s). $R_{12}$ and $R_{13}$ in formulas (J), (L) and (M) is the same as defined in $R_{11}$ of formula (II), provided that $R_{12}$ is not to be hydroxy, and $Z_2$''' is an atomic group necessary to form a heterocyclic ring. $R_{12}$ and $R_{13}$ are preferably alkyl, aryl, carboxy, oxycarbonyl, cyano, alkoxy, aryloxy, amino, amido, a hydrogen atom or a halogen atom.

The cyan coupler of formula (II) include couplers described in Japanese patent Application No. 63-321488, 64-36996, 64-41183, 64-52293, 64-97598, 64-9884 and 64-125052 and can be synthesized by the method described therein or references cited therein.

Exemplary examples of the cyan coupler represented by formula (I) or (II) are shown below, but the coupler is not limited to these examples and further including, for example, C-1 to C-35 described in JP-A 1-144052 at page 7, right upper column to page 9 right upper column and A-1 to M-8 described in JP-A 4-133054 at page 6, right lower column to page 12, right lower column.

I—1

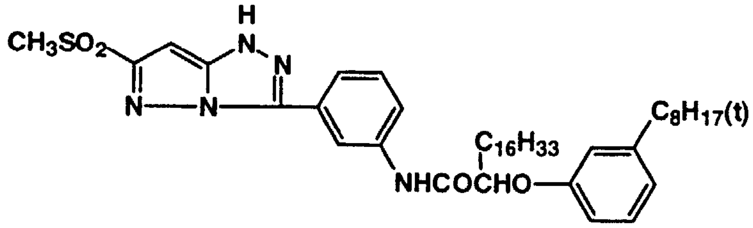

I—2

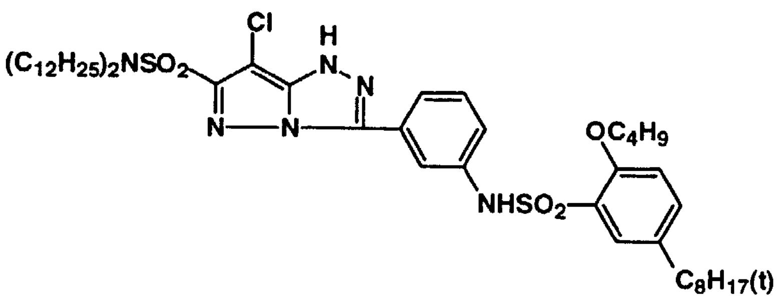

I—3

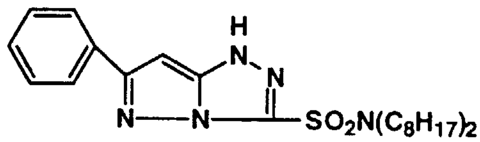

I—4

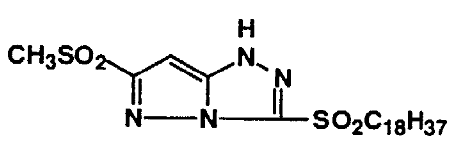

I—5

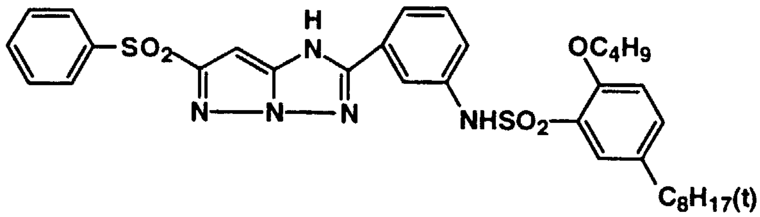

I—6

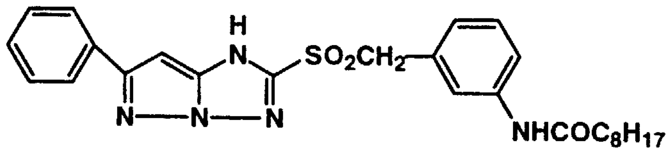

I—7

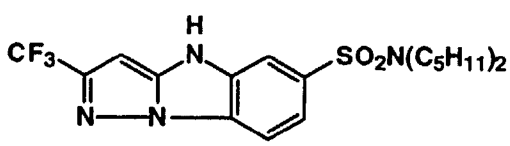

I—8

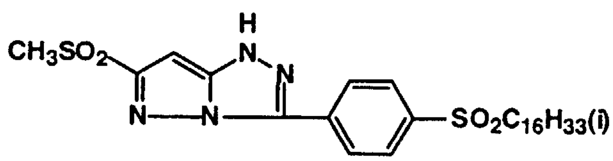

I—9

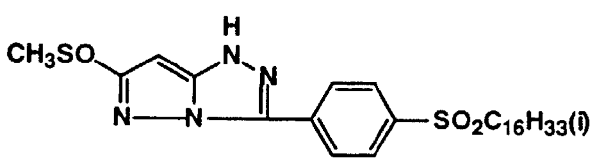

I—10

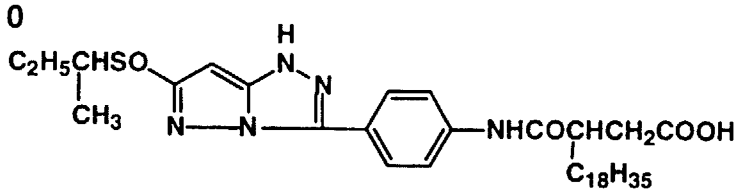

I−11

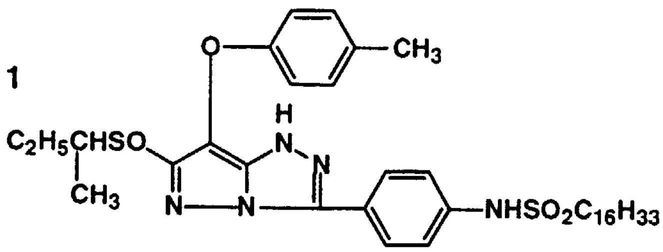

I−12

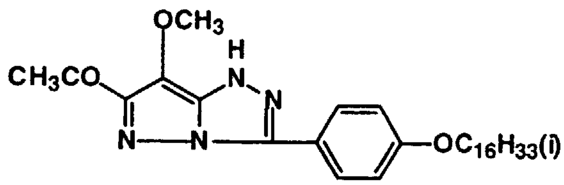

I−13

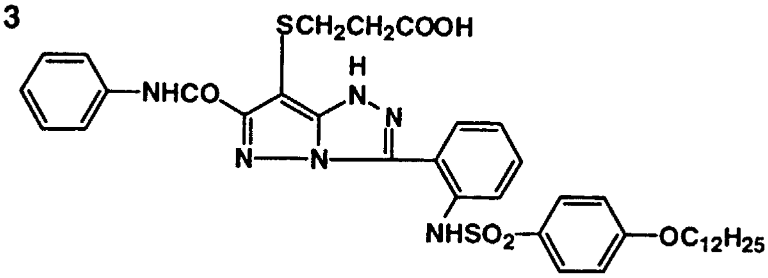

I−14

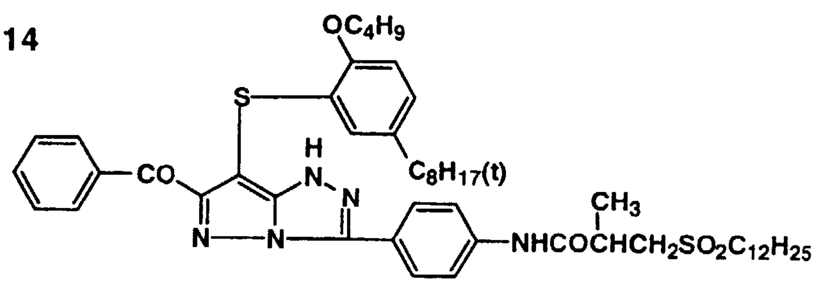

I—15

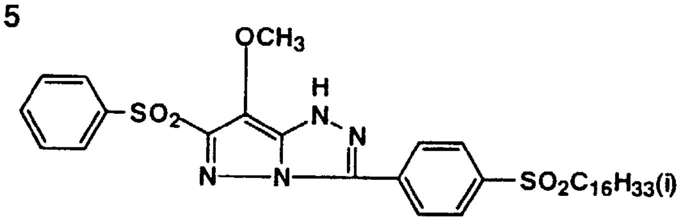

I—16

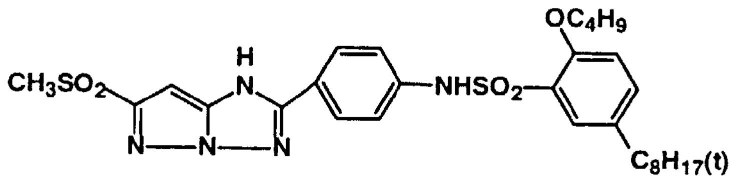

I—17

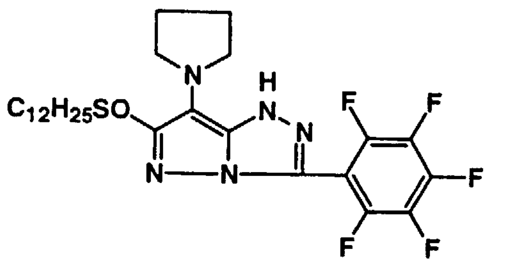

I—18

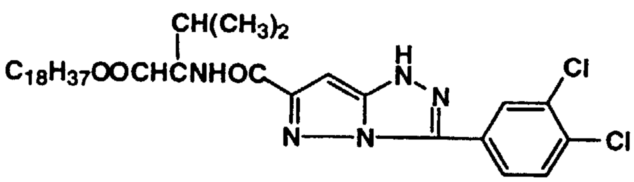

II—1

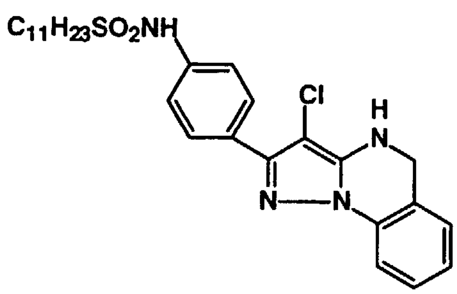

II−2

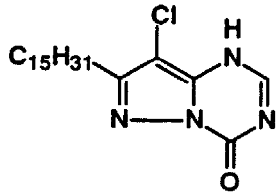

II−3

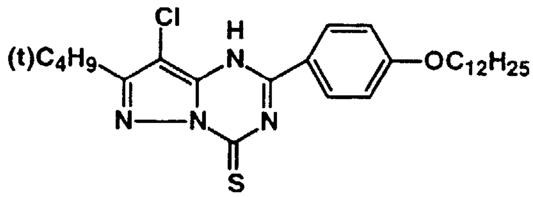

II−4

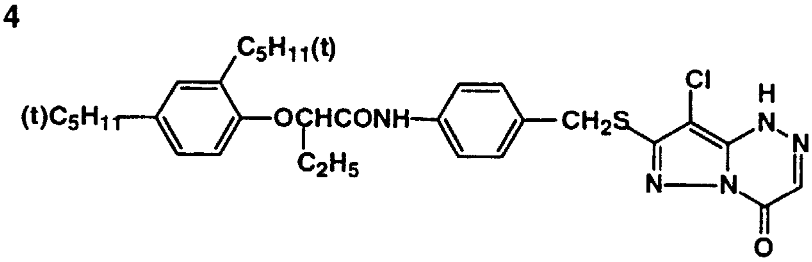

II−5

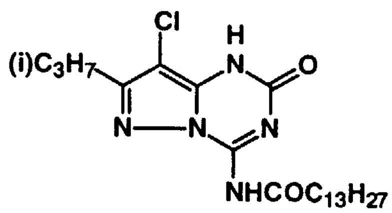

II—6

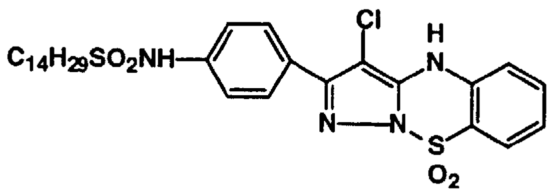

II—7

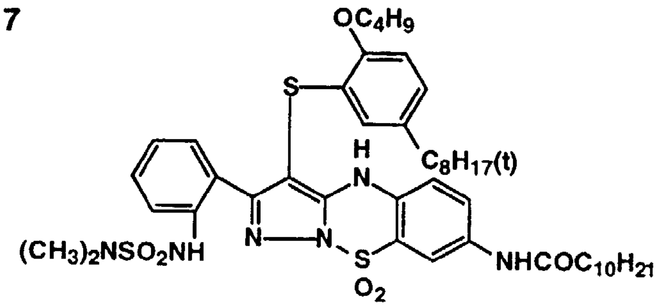

II—8

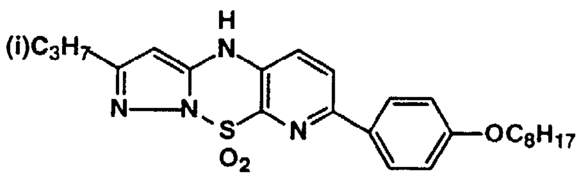

II—9

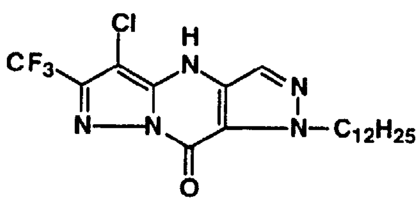

II−10

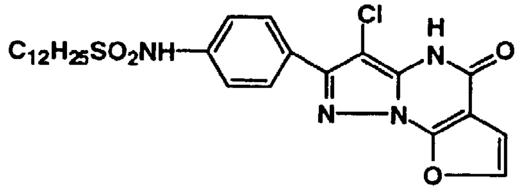

II−11

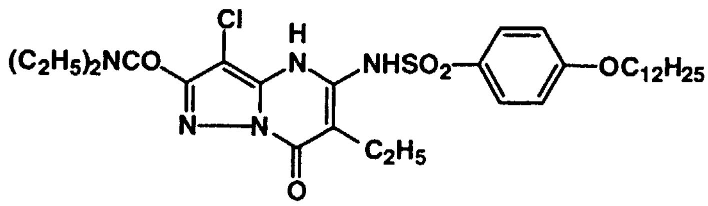

II−12

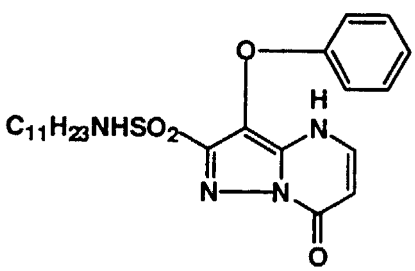

II−13

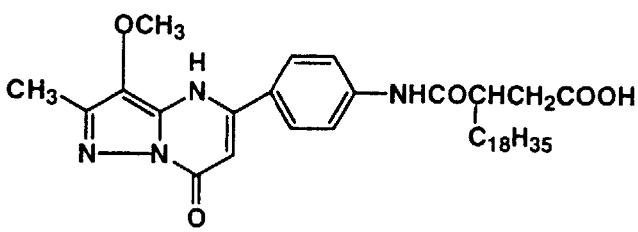

II—14

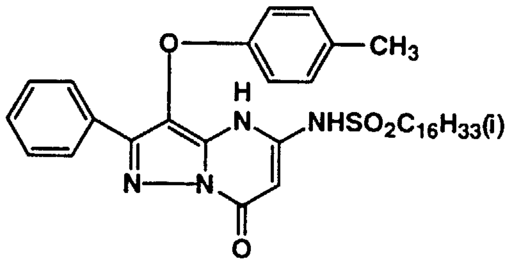

II—15

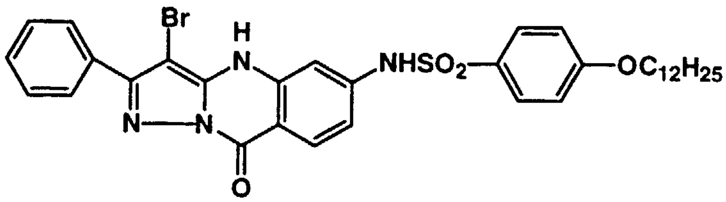

II—16

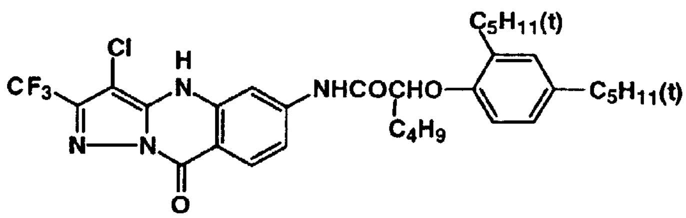

II—17

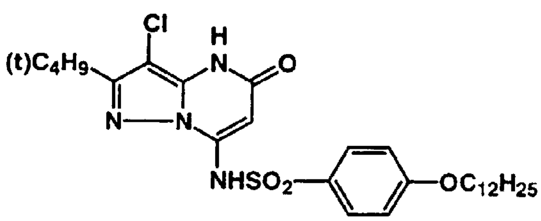

II−18

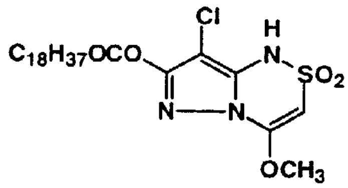

The cyan coupler described above is used within the range of $1x10^{-3}$ to 1 mol, and preferably $1x10^{-2}$ to $8x10^{-1}$ mol per mol of silver halide. Further this cyan coupler can be used in combination with another cyan coupler. Applicable to incorporate the cyan coupler into the color photographic material used in the invention are known techniques employed in conventiona cyan coyplers. the coupler is dissolver in a high boiling silvent, optionally in combination with a low boiling solvent and incorporated in a silver halide emulsion in the form of a dispersion. Further, hydroquinone derivatives, a U.V. absorbent or an anti-fading additive may optionally be added thereto.

The silver halide photographic material usedin the invention preferably contains silver halide grains occluding at least a metal selected from Mn, Cu, Zn, Ga, Cd, Re, Pb, Bi, and metals of Group VIII of the periodic table. Of these metals, Ir, Rh, Pb and Re are preferred. The metal is preferably occluded in an amount of $10^{-9}$ to $10^{-2}$ mol, and more preferably $10^{-8}$ to $10^{-3}$ mol per mol of silver halide. The metal can be occliuded in silver halide grains by adding a metal ion in the form of an aqueous solution or a solution of an organic solvent or making the metal ion cocurrently present in a halide salt solution while mixing silver salt and halide salt solutions to form silver halide grains. Alternatively, after forming silver halide grains, a metal ion containing solution added thereto to allow the metal to be occluded. In this case, silver salt and halide salt solutions may further be added thereto to allow silver halide grains to grow. The metal is added in the form of a metal complex or a metal compound such as metal salt of an oxygen acid or an organic acid. The metal may be occluded at any position within the grain, and can be localized in a specified position or occluded throughout the grain. Two or more kinds of metals may be occluded, and in cases where occluded in core/shell type silver halide grains, the metal may separately be occluded into a core and a shell.

A support of the photographic material used in the invention has a weight of not more than 130 $g/m^2$, and preferably 70 to 120 $g/m^2$. The photographic material is comprised of at least a yellow image forming silver halide emulsion layer, a magenta image forming silver halide emulsion layer and a cyan image forming silver halide emulsion layer each having a spectral sensitivity maximum wavelength different from the others. Each color image can be formed by exposure to a laser light of the wavelength corresponding to the spectral sensitivity wavelength region of each emulsion layer. A raw (i.e., unexposed and not processed) sample of the photographic material used in the invention preferably has a reflection density of not less than 0.8, and more preferably not less than 1.0, which can be measured at the wavelength of the laser exposure. The reflection density of the raw photographic material sample can be measured by the method known in the art. For example, spectral reflection density values measured by using Color Analyzer 607 (available from Hitachi Seisakusho) can be used.

To make the reflection density prior to processing 0.8 or more, it is preferable to incorporate a water soluble dyestuff having an absorption within the spectral sensitivity region of the silver halide emulsion layer described above and/or to provide antihalation in the lowest layer or another layer. It is also preferred to incorporate a dyestuff in the form of a solid particle dispersion to prevent the dye from diffusion in the photographic material.

Examples of the water soluble dyestuff usable in the invention include those of oxonol, cyanine, merocyanine, azo, anthraquinone, and allylidene. Of these, an oxonol dyestuff and merocyanine dyestuff are preferred in terms of high degradability on processing and having no sensitizing ability to silver halide. The oxonol dyestuff is described in U.S. Patent No. 4,187,225; and JP-A 48-42826, 49-5125, 49-99620, 50-91627, 51-77327, 55-120660, 58-24139, 58-143342, 59-38742, 59-111640, 59-111641, 59-168438, 60-218641, 62-31916, 62-66275, 62-66276, 62-185755, 62-273527 and 63-139949. The merocyanine dyestuff is described in JP-A 50-145124, 58-120245, 63-34537, 63-34538, 63-34539, and 63-58437. Exemplary examples of the oxonol dyestuff and merocyanine dyestuff include water soluble yellow dyestuffs AIY-1 to AIY-14, water soluble magenta dyestuffs AIM-1 to AIM-14 and water soluble cyan dyestuffs AIC-1 to AIC-14, as described in Japanese Patent Application No. 7-150291. Exemplary examples of water soluble dyestuffs other than the oxonol dyestuff and merocyanine dyestuff include water soluble yellow dyestuffs AIY-15 to AIY-18, water soluble magenta dyestuffs AIM-15 to AIM-18 and water soluble cyan dyestuffs AIC-15 to AIC-18, as described in Japanese Patent Application No. 7-150291. Furthermore, the water soluble dyestuff usable in the invention include dyestuffs A-1 to A-43 described in JP-A 4-330437. The water soluble dyestuff is incorporated in an amount giving 1.0 or more of the reflection density, which is measured at the wavelength of the spectral sensitivity maximum of the emulsion included in the unprocessed photographic material. The water soluble dyestuff can be incorporated singly or in combinations thereof.

The antihalation layer can be provided in the lowest layer or any other layer. The antihalation layer contains a light-absorbing compound. The light-absorbing compound includes a variety of light-absorbing organic compounds and inorganic compounds. Suitable inorganic compounds include colloidal silver and colloidal manganese, of which colloidal silver is specifically preferred. These colloid-formed metals are superior in decolorizability and advatageously employed in the color photographic material according to the invention. The colloidal silver, e.g., black colloidal silver can be obtained by a process in which silver nitrate is reduced, in gelatin, in the presence of a reducing agent such as hydroquinone, phenidone, ascorbic acid, pyrogallol or dextrin, while being maintained at specific alkalinity, followed by being neutralized, cooled, set and subjected to noodle washing to remove the reducing agent and unnecessary soluble salts. When reduced in alkalinity in the presence of an azaindene compound or a mercapto compound to prepare colloidal silver particles, a colloidal silver dispersion comprised of homogeneous particles can be obtained. The coverage of the colloidal silver can optionally be selected so as to give 1.0 or more of the reflection density measured at 730 nm of the unprocessed photographic material. In cases where is used in combination with other water soluble dyestuff(s), the reflection density of the unprocessed photographic material ispreferably to be 1.0 or more.

The color photographic material according to the invention can contain a dyestuff having at least one of a carboxy group, sufonamido group and sulfamoyl group in the form of a solid particle dispersion, in a silver halide emulsion layer and/or other hydrophilic colloid layer. These dyestuffs are those represented by the following formulas [1] to [8]:

formula [1]

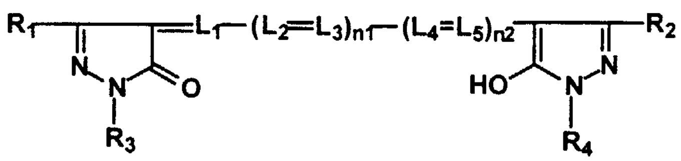

wherein $R_1$ and $R_2$ are each a hydrogen atom, alkyl, alkenyl, aryl, heterocyclic group, -COOR5, $-COR_5$,$-SO_2R_5$,$-SOR_5$, $-SO_2N(R_5)R_6$, $-CON(R_5)R_6$, $-N(R_5)R6$, $-N(R_5)SO_2R_6$, $-N(R_5)COR_6$,$-N(R_5)CON(R_6)R_7$, $-N(R_5)CSN(R_6)R_7$, $-OR_5$, $-SR_5$ or cyano; $R_3$ and $R_4$ each are a hydrogen atom, alkyl, alkenyl, cycloalkyl, aryl or a heterocyclic group; $R_5$, $R_6$ and $R_7$ each are ahydrogen atom, alkyl, alkenyl, cycloalkyl, aryl or a heterocyclic group; $L_1$ to $L_5$ each are a methin chain; $n_1$ is 0 or 1; and $n_2$ is an integer of 0 to 2;

formula [2]

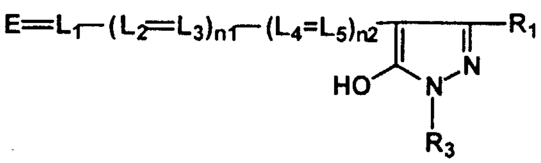

wherein $R_1$, $R_3$, $L_1$ to $L_5$, $n_1$ and $n_2$ are the same as $R_1$, $R_3$, $L_1$ to $L_5$, $n_1$ and $n_2$ defined in formula [1], and E is an acidic nucleus necessary to form an oxonol dye;

formula [3]

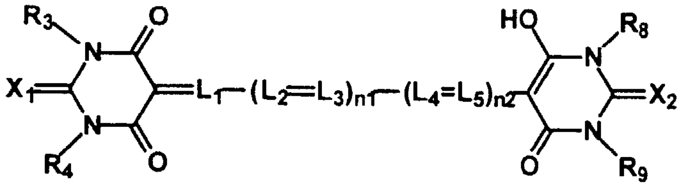

wherein $R_3$, $R_4$, $L_1$ to $L_5$, $n_1$ and $n_2$ are the same as $R_3$, $R_4$, $L_1$ to $L_5$, $n_1$ and $n_2$ defined in formula [1], $R_8$ and $R_9$ each are the same $R_3$ and $R_4$, respectively, and $X_1$ and $X_2$ each are a oxygen atom or sulfur atom;

formula [4]

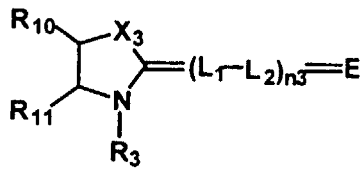

wherein $R_3$, $L_1$ and $L_2$ are the same as $R_3$, $L_1$ and $L_2$ defined in formula [1], E is the same as defined in formula [2], $R_{10}$ and $R_{11}$ each are a hydrogen atom, alkyl, alkenyl, aryl, a heterocyclic group, nitro, cyano, a halogen atom, $-OR_5$ , $-SR_5$, $-N(R_5)R_6$, $-N(R_5)SO_2R_6$, $-N(R_5)COR_6$, $-COR_5$ or $-COOR_5$, provided that $R_{10}$ and $R_{11}$ may combined with each other to form a ring, X3 is an oxygen atom, sulfur atom, selenium atom, $-(R_{12})C(R_{13})-$ or $-N(R_3)-$, $R_3$, $R_5$ and $R_6$ are the same $R_3$, $R_5$ and $R_6$ defined in formula [1], $R_{12}$ and $R_{13}$ each are a hydrogen atom or alkyl, and $n_3$ is an integer of 1 to 3,

formula [5]

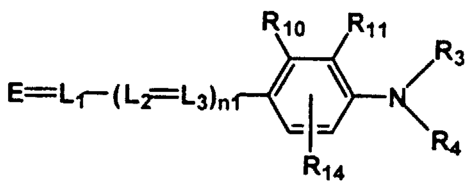

wherein $R_3$, $R_4$, $L_1$ , $L_2$ , $L_3$ and $n_1$ are the same as $R_3$, $R_4$, $L_1$ , $L_2$, $L_3$ and $n_1$ defined in formula [1], E is the same as defined in formula [2], $R_{10}$ and $R_{11}$ each are the same $R_{10}$ and $R_{11}$ defined in formula [4], and $R_{14}$ is the same as defined in $R_{10}$,

formula [6]

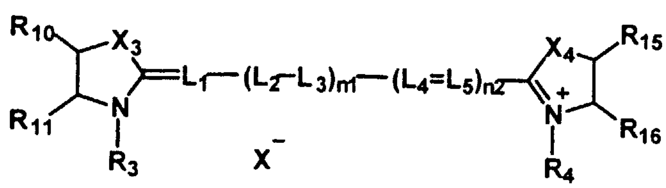

wherein $R_3$, $R_4$, $L_1$ to $L_5$, $n_1$ and $n_2$ are the same as $R_3$, $R_4$, $L_1$ to $L_5$, $n_1$ and $n_2$ defined in formula [1], $R_{10}$, $R_{11}$ , $X_3$ each are the same as $R_{10}$, $R_{11}$, $X_3$ defined in formula [4], $X_4$ is the same as defined in $X_3$, and $R_{15}$ and $R_{16}$ are the same as defined in $R_{10}$, and $X^-$ is a group having an anion (or anionic group), provided that $R_{10}$ and $R_{11}$, or R15 and $R_{16}$ may combine with each other to form a ring;

formula [7]

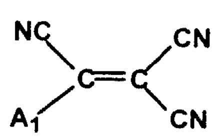

wherein $A_1$ is a pyrrol nucleus, imidazole nucleus, pyrazole nucleus, phenol nucleus, naphthol nucleus or condensed heterocyclic ring;

formula [8]

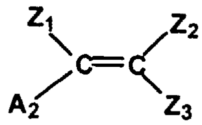

wherein $Z_1$, $Z_2$ abd $Z_3$ each are an electron-withdrawing group and $A_2$ is aryl or a heterocyclic group.

Examples of the dyestuff having at least one of a carboxy group, sufonamido group and sulfamoyl group include exemplified dyestuffs 1-1 to 8-7 described in Japanese Patent Application No. 7-150291. The dyestuff having at least one of a carboxy group, sufonamido group and sulfamoyl group is substantially insoluble in water (i.e., water at a pH of 7 or less), having a hydrophilic group which is capable of being dissociated at a pH of 9 or more. The dyestuff, which is made to be present in gelatin or a polymeric binder, in the form of a fine solid particle dispersion (i.e., solid particles having microscopic dimension and preferably an average particle size of 10 μm or less, and more preferably 1 μm or less) obtained by means of a technique of pulverizing with a ball mill or a sand mill or a technique of dissolving in an organic solvent and dispersing in a gelatin solution, can be incorporated into any one of photographic component layers including a light sensitive emulsion layer and a hydrophilic colloid layer. The fine solid particle dispersion of the dyestuff having at least one of a carboxy group, sufonamido group and sulfamoyl group can be stably present, in a water-insoluble form, in the color photographic material, and almost disappears by being subjected, after exposure, to processing with a color developing solution (preferably at a pH of 9 or more). The dyestuff having at least one of a carboxy group, sufonamido group and sulfamoyl group may be used in combination thereof or in combination with a water soluble dyestuff or colloidal silver. The dyestuff having at least one of a carboxy group, sufonamido group and sulfamoyl group can be incorporated by appropriately selecting the content so as to give 0.8 or more of a reflection density measured at a wavelength of the spectral sensitivity maximum of at least one of the emulsions included in the unprocessed color photographic material according to the invention. The amount to be incorporated is generally in the range of 0.001 to 0.5 g/$m^2$.

A support used in the invention is covered with a resin comprised of, as a main component, a polyolefin resin on both sides of a paper base. When the surface roughness of the support is continuously measured and measured signals are analyzed with respect to frequency, an integrated value of power spectrum within the frequency range of 1 to 12.5 mm (PY value) is preferably not more than 2.9 μm, more preferably not more than 1.8 μm, and still more preferably not more than 1.15 μm. The use of a support having a PY value of more than 2.9 μm result in non-uniform images at an increased rotating speed of the drum, leading to deteriorated dot reproduction. To determine the PY value, the surface roughness of the support is continuously measured using a film thickness continuously-measuring instrument (e.g., available from Anritsu Electric Co., ltd.) and measured signals are analyzed with respect to frequency using a frequency analyzer (e.g., VC-2403, available from Hitachi Electronics Co, Ltd).

The raw material of the base paper used for the present invention can be selected from those ordinarily used for photographic paper. For example, natural pulp, synthetic pulp, mixtures of natural pulp and synthetic pulp and various raw materials for papering are cited. Ordinarily, conifer pulp, hard-wood pulp and natural pulp wherein a mixed pulp of a conifer pulp and a hard-wood pulp are the main components are widely be used. In addition, in the above-described support, additives ordinarily used in papers such as sizing agents, fixing agents, heavy duty strengthening agents, fillers, anti-static agents and dyes may be added. In addition, surface sizing agents, surface tension agents and anti-static agents may be coated appropriately on the surfaces.

For the support described above, those having a flat surface and ordinarily a weight of 50 through 300 g/$m^2$, are preferably used. A resin, laminated on both surfaces may be selected from a single polymer such as ethylene, polyethylene terephthalate and α-olefines such as polypropylene, a copolymer of at least two kinds of the above-mentioned olefines and mixtures of at least two kinds of polymers. Specifically preferable polyolefin resins are a low density polyethylene, high density polyethylene or an admixture of them. The molecular weight of the polyolefin resin is not specifically limited. However, normally, those within a range of 20,000 through 200,000 are preferable. A polyolefin resin-laminated layer on one side of a photographic support used in the present invention, where a photographic emulsion is coated, is preferably 25 through 50 μm and more preferably 25 through 35 μm.

With regard to polyolefin used for laminating the rear side (the side opposite to the surface wherein emulsion layers are provided) of the support, ordinarily, a mixture of a low density polyethylene and a high density polyethylene is fused and then laminated. This layer is generally subjected to a matting treatment.

When laminating the surface and a back side of the support, in order to enhance flatness of an exposed photographic paper in a normal environment, a means to increase the density of the resin layer on the surface slightly more than the back side and a means to increase the amount of lamination of the back side to be greater than the surface, are ordinarily adopted.

In addition, for ordinary lamination of the surface and back of the support, a polyolefin resin component is formed on the support by means of a fusion extruding coating method. It addition, it is preferable that the surface of the support and, if necessary, both sides of the support are subjected to corona discharge processing as well as flame processing. In addition, it is also preferable to provide a sub-coating layer for improving adhesion property with the photographic emulsion on the surface of the surface lamination layer or to provide a backing layer for improving printing and writing property and anti-static property on the lamination layer on the back side.

In a polyolefine resin used for laminating the surface (on which emulsion layers are provided) of the support used in the present invention, preferably 13 through 20 weight % and more preferably 15 through 20 weight % of white pigment is dispersed and mixed. As a white pigment, an inorganic and/or an organic white pigment can be used, including sulfate of alkaline earth metals such as barium sulfate, carbonate of alkaline earth metals such as calcium carbonate, silica such as fine powdery silicic acid and synthetic silicate, calcium silicate, alumina, alumina hydrate, titanium oxide, zinc oxide, talc and clay.

Of these, preferable are barium sulfate, calcium carbonate and titanium oxide. More preferable are barium sulfate and titanium oxide. The titanium oxide may either be a rutile type or an anatase type. In addition, those laminated with a metal oxide such as alumina oxide hydrate and ferrite oxide hydrate may also be used. In addition, it is preferable to use an anti-oxidation agent, a colored pigment for improving whiteness and a fluorescent brightening agent. When laminating the surface and a back side of the support, in order to enhance flatness of an exposed photographic paper in a normal environment, a means to increase the density of the resin layer on the surface slightly more than the back side and a means to increase the amount of lamination of the back side to be greater than the surface, are ordinarily adopted.

In addition, it is preferable to use an anti-oxidation agent, a colored pigment for improving whiteness and a fluorescent brightening agent.

It is preferable that sharpness is improved by coating a hydrophilic colloidal layer containing a white pigment on the support. As a white pigment, the same white pigment as the foregoing can be used. Titanium oxide is preferable. In a hydrophilic colloidal layer containing a white pigment, it is preferable to add a hollow fine particle polymer and a high boiling organic solvent since sharpness and/or curling resistance can be improved.

The surface of the reflective support used in the present invention may be flat or may have some appropriate surface coarseness. However, it is preferable to select a reflective support having glossiness close to a printed material. For example, it is preferable to use a white support whose average surface roughness stipulated in JIS B 0601-1976 is 0.30 through 3.0 μm.

In the present invention, surface roughness on an image forming surface is preferably 0.30 through 3.0 μm. For this purpose, a matting agent may be added in a structural layer on the image forming surface side. The matting agent may be added in the silver halide emulsion layer, the protective layer, the intermediate layer and the subbing layer. It may be added to plural layers, and preferably, to the outermost light-sensitive layer.

It is preferable that the surface on the image forming layer side of the photographic material of the present invention has glossiness close to a printed material. For example, the degree of glossiness GS (60°) measured by a method stipulated in JIS-Z8741 is preferably 5 through 60.

In a preferable embodiment of the present invention, it is preferable to form a protective layer on the outermost surface of the photographic material and to add fine particle powder into the protective layer. As the fine particle powder (matting agent) and using method thereof, it is preferable to use a technology described in Japanese Patent O.P.I. Publication No. 95283/1994, page 4 left column, line 42nd through page 4, right column, line 33. In addition, as a reflective support used in the present invention, synthetic resin film supports such as polypropylene laminated with polyolefin on the surface can also be used.

There is no limit to the thickness of the reflective support used in the present invention, 80 through 160 μm being preferable, and 90 through 130 μm being more preferable.

The diameter of an infrared laser beam used in the invention is preferably not more than 25 μm, and more preferably 6 to 22 μm. When performing scanning-exposure on a high-speed rotating drum, specifically with the infrared laser, image non-uniformity increases, leading to deteriorated image sharpness. Limitation of the beam diameter to the value as above enables to form uniform, high definition images. JP-A 4-330437 described above is silent with respect to such problems regarding the rotating drum. According to the invention, writing-in of uniform, high definition images at high productivity and at a high speed becomes feasible.

In the process of preparing a color proof by subjecting a color photographic material to scanning-exposure, based on halftone dot image information comprised of color-separated yellow, magenta, cyan and black image informations, marked effects of the invetion are displayed in cases where at least a part of the halftone dot image information

is converted to halftone dot images having the dot number of not less than $200x10^3$ per $inch^2$ at a dot percentage of 40%. The dot number is preferably not less than $300x10^3$, more preferably not less than $400x10^3$, and still more preferably $400x10^3$ to $2000x10^3$. The dot number can be measuredby counting halftone dot images photographed through an optical microscope.

An infrared-sensitive silver halide emulsion layer used in the invention a spectral sensitivity maximum at the wavelength of 700 nm ot more. Preferably used as a means for infrared spectral sensitization is sensitization with an infrared sensitizing dye. The infrared sensitizing dye usable in the invention is not specifically limited, but tricarbocyanibe dyes and/or4-quinoline nucleus-containing dicarbocyanine dyes are preferably used, and the tricarbocyanine dyes are specifically preferred. Of the tricarbocyanine dyes, a dye represented by the following formula [Ia] or [Ib] is preferably used:

formula [Ia]

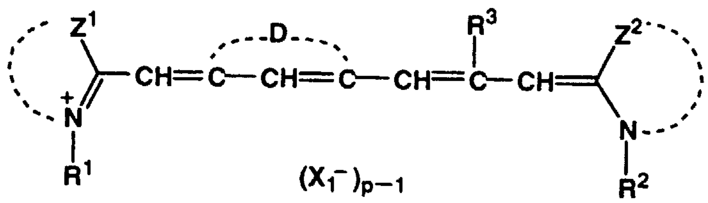

formula [Ib]

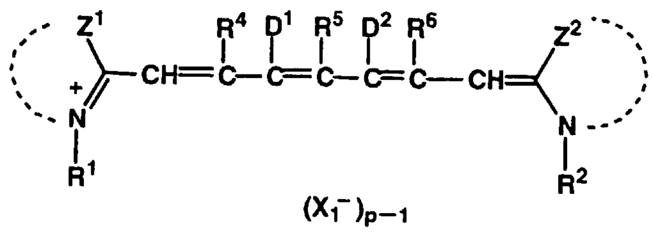

In the formulas, $R^1$ and $R^2$, each of which may be the same or differen from the other, are alkyl (preferably having 1 to 18 carbon atoms, such as methyl, ethyl, propyl, butyl, pentyl, hexyl), substituted alkyl having not more than carbon atom in the alkyl portion and substituted by a substituent , including carboxy, sulfo, cyanop, halogen atom such as fluorine, chlorine or bromine, hydroxy, alkoxycarbonyl group having 8 or less carbon atoms, such as methoxycarbonyl, ethoxycarbonyl or benzyloxycarbonyl), alkoxy (having 7 or less carbon atoms, such as methoxy, ethoxy, propoxy, butoxy, or benzyloxy), aryloxy (such as phenoxy or p-tolyloxy), acyloxy (havung 3 or less carbon atoms, such as acetyloxy or ptopionyloxy), acyl (having 8 or less carbon atoms, such as acetyl, propionyl, benzoyl or methyl), carbamoyl (such as carbamoyl, N,N-dimethylcarbamoyl, morpholinocarbamoyl or piperidylcarbamoyl), sulfamoyl (such as sulfamoyl, N,N-dimethylsulfamoyl or morpholinosulfonyl), and aryl (such as phenyl, p-hydroxyphenyl, p-carboxyphenyl, p-sulfophenyl or $\alpha$-naphthyl). $R^3$ is a hydrogen atom, methyl, methoxy or ethoxy. $R^4$ and $R^6$ each are a hydrogen atom, lower alkyl (such as methyl, ethyl, or propyl), lower alkoxy (such as methoxy, ethoxy, propoxy or butoxy), phenyl or benzyl. $R^5$ is a hydrogen atom, lower alkyl (such as methyl, ethyl od propyl), lower alkoxy (such as methoxy, ethoxy, propoxy or butoxy), phenyl, benzyl or $-N(W^1)(W^2)$, in which $W^1$ and $W^2$ each are substituted or unsubstituted alkyl (having 1 to 18 carbon atoms and preferably 1 to 4 carbon atoms in the alkyl portion, such as methyl, ethyl, propyl, butyl, benzyl, or phenetyl) or aryl (such as phenyl, naphthyl, tolyl or p-chlorophenyl), provided that $W^1$ and $W^2$ may combine with each other to form a 5- or 6-membered haterocyclic ring.

D represents an atomic group necessary to complete a divalent alkylene bond such as ethylene or triethylene. This alkylene bond may be substituted by one, two or more appropriate group such as alkyl having 1 to 4 carbon atoms (such as methyl, ethyl, propyl, i-propyl or butyl), halogen atom (such as chlorine or bromine) or alkoxy (having 1 to 4

carbon atoms, such as methoxy, ethoxy, propoxy, i-propoxy or butoxy).

$D^1$ and $D^2$ each are a hydrogen atom, provided that $D^1$ and $D^2$ may combine witheach other to form a divalent alkylene bond as defined above. $Z^1$ and $Z^2$ each represent a non-metallic atom group necessary to form a 5- or 6-membered nitrogen-containing heterocyclic ring, such as a thiazole nucleus {e.g., benzothiazole, 4-chlorobenzothiazole, 5-chlorobenzothiazole, 6-chlorobenzothiazole, 7-chlorobenzothiazole, 4-methylbenzothiazole, 5-methylbenzothiazole, 6-methylbenzothiazole, 5-bromobenzothiazole, 6-bromobenzothiazole, 5-iodobenzothiazole, 5-phenylbenzothiazole, 5-methoxybenzothiazole, 6-methoxybenzothiazole, 5-ethoxybenzothiazole, 5-carboxybenzothiazole, 5-ethoxycarbonylbenzothiazole, 5-phenethylbenzothiazole, 5-fluorobenzothiazole, 5-trifluorobenzothiazole, 5, 6-dimethylbenzothiazole, 5-hydroxy-6-methylbenzothiazole, tetrahydrobenzothiazole, 4-phenyl-benzothiazole, naphtho[2,1-d]thiazole, naphtho[1,2-d]thiazole, naphtho[2,3-d]thiazole, 5-methoxynaphtho[1,2-d]thiazole, 7-ethoxynaphtho[2,1-d]thiazole, 8-methoxynaphtho[2,1-d]thiazole, 5-methoxynaphtho[2,3-d]thiazole, etc.}; selenazole nucleus {e.g., benzoselenazole, 5-chlorobenzoselenazole, 5-methoxybenzoselenazole, 5-methylbenzoselenazole, 5-hydroxybenzoselenazole, naphtho[2,1-d]selenazole, naphtho[1,2-d]selenazole, etc.}; oxazole nucleus {e.g., benzoxazole, 5-chlorobenzoxazole, 5-methylbenzoxazole, 5-bromobenzoxazole, 5-fluorobenzoxazole, 5-phenylbenzoxazole, 5-methoxybenzoxazole, 5-trifluorobenzoxazole, 5-hydroxybenzoxazole, 5-carboxybenzoxazole, 6-methylbenzoxazole, 6-chlorobenzoxazole, 6-methoxybenzoxazole, 6-hydroxybenzoxazole, 4,6-dimethylbenzoxazole, 5-ethoxybenzoxazole, naphtho[2,1-d]oxazole, naphtho[1,2-d]oxazole, naphtho[2,3-d]oxazole, etc.}; quinoline nucleus {e.g., 2-quinoline, 3-methyl-2-quinoline, 5-ethyl-2-quinoline, 6-methyl-2-quinoline, 8-fluoro-2-quinoline, 6-methoxy-2-quinoline, 6-hydoxy-2-quinoline, 8-chlorol-2-quinoline, 8-fluoro-2-quinoline, etc.};3,3-dialkylindolenine nucleus (e.g., 3,3-dimetylindolenine, 3,3-dietylindolenine, 3,3-dimetyl-5-cyanoindolenine, 3,3-dimetyl-5-methoxyindolenine, 3,3-dimetyl-5-methylindolenine, 3,3-dimetyl-5-chloroindolenine, etc.); imidazole nucleus {e.g., 1-methylbenzoimidazole, 1-ethylbenzoimidazole, 1-methyl-5-chlorobenzoimidazole, 1-ethyl-5-chlorobenzoimidazole, 1-methyl-5,6-dichlorobenzoimidazole, 1-ethyl-5,6-dichlorobenzoimidazole, 1-alkyl-5-methoxylbenzoimidazole, 1-methy-5-cyanolbenzoimidazole, 1-methyl-5-fluorobenzoimidazole, 1-ethyl-5-fluorobenzoimidazole, 1-phenyl-5,6-dichlorobenzoimidazol, 1-allyl-5,6-dichlorobenzoimidazole, 1-allyl-5-chlorobenzoimidazole, 1-phenylbenzoimidazole, 1-phenyl-5-chlorobenzoimidazole, 1-methyl-5-trifluorobenzoimidazole, 1-ethyl-5-trifluoromethylbenzoimidazole, 1-ethylnaphtho[1,2-d]imidazole, etc.}; pyridine nucleus (e.g., prridine, 5-methyl-2-pyridine, 3-methyl-4-pyridine, etc.).

Of these nuclei, a thiazole nucleus and a oxazole nucleus are preferably used, and benzothiazole nucleus, naphthothiazole nucleus, benzoxazole nucleus and naphthooxazole nucleus are more preferably used. $x_1^-$ is an acidic anion and p is 1 or 2.

Among 4-quinoline nucleus containing dicarbocyanine dyes used in the invention, specifically preferred one is represented by the following formula [II]:

formula [II]

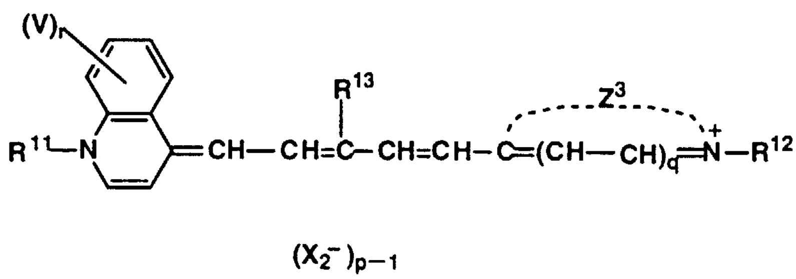

wherein $R^{11}$ and $R^{12}$ each are the same as defined in $R^1$ and $R^2$; $R^{13}$ is the same as defined in $R^4$, provided that $R^{13}$ is preferably a lower alkyl or benzyl; V are a hydrogen atom, lower alkyl (e.g., methyl, ethyl, propyl), alkoxy (e.g., methoxy, ethoxy, butoxy), halogen atom (e.g., fluorine, chlorine) and substituted alkyl (e.g., trifluoromethyl carboxymethyl); $Z^3$ is the same as defined in $Z^1$ and $Z^2$; $X_2^-$ and p is the same as $X_1^-$ and p defined in formulas [Ia] and [Ib]; q and r each are 1 or 2.

Exemplary examples of the infrared sensitizing dyes include dyes I-1 to II-21 described in JP-A 2-40646 at pages (69-(9), compounds described in JP-A 4-330437 and compounds described in JP-A 8-101486.

The photographic material used in the invention has a hydrophilic colloidal layer containing fine powdery particles and having a dry thickness of 3 to 15 μm on the side of the reflective support opposite a silver halide emulsion layer. The fine powdery particles are known in the art as a matting agent, and are hereinafter denoted as a matting agent, unless otherwise noted.

The photographic material has, on the emulsion side of the reflective support, a total coating weight of a

hydrophilic binder of 5 to 10 g/m$^2$, and preferably 6 to 9 g/m$^2$. The photographic material also has, on the the support opposite the emulsion layer, a total coating weight of the hydrophilic binder of 3 to 8 g/m$^2$.

Examples of the matting agent usable in the invention include crystalline or non-crystalline silica, titanium dioxide, magnesium sulfate, calcium carbonate, barium sulfate, strontium barium sulfate, alumina magnesium silicate, silver halide, silicon dioxide, acrylic acid/methyl acrylate copolymer, acrylic acid/ethyl methacrylate copolymer, itaconic acid/styrene copolymer, maleic acid/styrene copolymer, maleic acid/methyl methacrylate copolymer, acrylic acid/phenylacrylate copolymer, polymethyl methacrylate, acrylic acid/methacrylic acid/ ethyl methacrylate copolymer polystyrene, starch, and cellulose acetate propionate. In addition, compounds described in U.S. Patents 1,221,980 and 2,992,101 are also cited. These can be used singly or in combination of two or more kinds thereof. Colloidal silica can also be used in combination with a matting agent.

The average particle size of the matting agent is preferably 1 to 10 μm, and more preferably 3 to 10 μm. The average particle size refers to an average value of particle diameters in the case of spherical particles, or an average value of diameters of a circle equivalent to the projected area in the case of a cubic form or a form other than the spherical form. The average particle size (rm) is defined as below. Applicable as an exemplary measuring method is the method described in JP-A 59-29243.

$$rm = \Sigma ni \cdot ri / \Sigma ni$$

where ri is a particle diameter and ni is the number of particles having a diameter of ri.

The matting agent used in the invention is incorporated in a layer on the side opposite the light sensitive emulsion layer, in the form a dispersion. The matting agent is dispersed in a hydrophilic binder optionally containing a nonionic, cationic or anionic surfactant using a high-speed mixer, homogenizer, ultrasonic homogenizer or ball mill and then is coated by an appropriate method. The coating weight of the matting agent is preferably 50 to 500 mg/m$^2$, and more preferably 70 to 300 mg/m$^2$. The content of the matting agent is preferably 3 to 50% by weight, and more preferably 5 to 20% by weight, based on a hydrophilic binder.

The silver halide photographic material, which has been wound into a roll and contained in a roomlight handling cartridge, is preferably used. The roomlight handling cartridge has not only a light-shielding means so as to prevent the photographic material from exposure under roomlight but also a pulling portion (or tab) for pulling the photographic material from the cartridge. Accordingly, when handled under roomlight, the photographic material is not exposed to light.

The photographic material, which has been wound into a roll and contained in a roomlight handling cartridge, is preferably wound so that the emulsion side of the photographic material is arranged to be on the outer side of the roll.

A support used in the photographic material preferably has a Taber stiffness of 0.8 to 4.0. The Taber stiffness can be measured by a rigidity measuring apparatus, such as model 150B Taber Stiffness Tester (available from TABER INSTRUMENT-A TELEDYNE COMPANY). The support is, in general, different in rigidity between in the longitudinal and width directions, and at least one of them is preferably within the stated range.

Layer arrangement of the photographic material used in the invention is not specifically limited, but an emulsion layer having spectral sensitivity in the longest wavelength region is preferably closer to the support than other layers. Specifically in cases where the emulsion layer having spectral sensitivity in the longest wavelength region is an infrared sensitive layer, the infrared sensitive emulsion layer is preferably closer to the support than other emulsion layers.

As the silver halide emulsion used in the present invention there may be used a surface latent image-type silver halide emulsion that is imagewise exposed to form a latent image on a surface, and further processed to thereby form a negative image. There may also be suitably used an internal latent image-type silver halide emulsion having its grain surface previously unfogged which, after being imagewise exposed, is subjected to fogging treatment (nucleus-formation treatment) followed by surface development or which, after being imagewise exposed, is subjected to surface development while being subjected to fogging treatment to thereby obtain a direct positive image. The above-described internal latent image-type silver halide grain-containing emulsion is an emulsion containing silver halide crystal grains each having a sensitivity speck mainly in the interior to form an internal latent image when exposed to light.

The above fogging treatment may be achieved by overall exposure of the emulsion to light, chemically fogged with a fogging agent, processed in a strong developing solution or subjected to heat treatment.

The overall exposure process is conducted by exposing a photographic material uniformly and overall after immersing the imagewise exposed photographic material into a developing solution or other aqueous solutions, or wetting therewith. Here, as a light source used, any light source that has a light-sensitive wavelength range of the photographic photographic material may be used. In addition, a high intensity light such as a flash may be given for a short time, or a low intensity light may be used for a period of longer time. In addition, the time of the overall exposure can be varied widely depending of the kind of the photographic photographic material, photographic processing conditions and the kind of light source used so that superior positive images can be obtained. It is still more preferable

that the overall exposure is gived in an amount within a given range, in combination with with the photographic material. Ordinarily, when exposure amount is excessively given, an increase of the minimum density and desensitization result, which tends to deteriorate image quality. As a technology of the fogging agent usable in the present invention, the technology described in JP-A No. 6-95283, page 18, right column, line 39 through page 19, left column, line 41 is preferable.

The previously unfogged internal latent image-type silver halide emulsion usable in the present invention is an emulsion containing silver halide grains each forming a latent image mainly within the grain and having most of sensitivity specks in the interior, and comprised of silver bromide, silver chloride, silver chlorobromide, silver chloroiodide, silver iodobromide, or silver chloroiodobromide.

The above emulsion is most preferably one which when coated on a support to prepare a sample so that its silver coating weight is in the range of about 1 to 3.5 g/$m^2$, and when a portion of the prepared sample is subjected to light intensity scale exposure for specified periods of time ranging from 0.1 to 1.0 second and developed at 20° C for 4 minutes in the following surface developing solution A, which contains substantially no silver halide solvent for developing the surface image of the grain, the maximum density of the thus processed piece is not more than 1/5 of the maximum density of the other part of the same sample that was obtained by being similarly exposed and developed at 20°C for 4 minutes in the following internal developing solution B capable of developing the internal latent image.

| (Surface developing solution A) | |
|---|---|
| Metol | 2.5 g |
| L-ascorbic acid | 10.0 g |
| Sodium metaborate, tetrahydrate | 35.0 g |
| Potassium bromide | 1.0 g |
| Water to make | 1000 cc |
| (Internal developing solution B) | |
| Metol | 2.0 g |
| Anhydrous sodium sulfite | 90.0 g |
| Hydroquinone | 8.0 g |
| Sodium carbonate, monohydrate | 52.5 g |
| Potassium bromide | 5.0 g |
| Potassium iodide | 0.5 g |
| Water to make | 1000 cc |

The internal latent image-type silver halide emulsions suitably usable in the present invention include those prepared in various methods, such as the conversion-type silver halide emulsion described in U.S. Patent No. 2,592,250; the silver halide emulsion comprising internal chemically sensitized silver halide grains described in U.S. Patent Nos. 3,206,316, 3,317,322 and 3,367,778; the emulsion containing polyvalent metallic ion-occluded silver halide grains described in U.S. Patent Nos. 3,271,157, 3,447,927; the silver halide emulsion comprising weakly chemically sensitized silver halide grains containing a dopant described in U.S. Patent No. 3,761,276; the silver halide emulsion comprising grains having a multilayer structure described in JP-A Nos. 50-8524, 50-38525 and 53-2408; and the silver halide emulsion described in JP-A Nos. 52-156614 and 55-127549. The internal latent image-type silver halide grain usable in the present invention may be any of silver halides such as silver bromide, silver chloride, silver chlorobromide, silver chloroiodide, silver iodobromide or silver chloroiodobromide. Silver chloride containing grains are superior in the developability and are suitable for rapid processing.

The silver halide crystal grains used in the present invention may have any of several common forms such as a cubic form, an octahedral form, a tetradecahedral form comprised of (100) and (111) faces, a form having (110) faces, a spherical form or a tabular form. Preferred silver halide grains are those having an average grain diameter of 0.05 to 3μm. The silver halide emulsion used in the present invention may be either a monodisperse emulsion comprised of grains which are homogeneous in the grain diameter and crystal habit, or a polydisperse emulsion comprised of grains which are inhomogeneous in the grain diameter and crystal habit. In the present invention, the monodisperse silver halide emulsion is one in which silver halide grains having a grain diameter within the range of the average diameter rm ± 20% accounts for preferably not less than 60%, more preferably not less than 70%, and still more preferably not less than 80% of the weight of the total silver halide grains. The average grain diameter (rm) herein is defined as the grain diameter ri in the instance where the product of frequency ni of the grain having a grain diameter ri and $ri^3$, i.e., ni x $ri^3$, comes to the maximum (rounded to three decimal places). Herein, the grain diameter, in the case of a spherical silver halide grain, is the diameter itself, while in the case of a non-spherical grain, is the diameter of an

equivalent circule to the grain projected area. The grain diameter can be obtained by a method in which the grain is electron microphotographically enlarged 10,000 to 50,000times, and the diameter of the enlarged grain image on its photo print or the area of the projection grain image enlarged likewise is actually measured. (The number of grains for measurement shall be 1000 or more at random.)

The most preferred highly monodispersed emulsion is comprised of silver halide grains having a grain diameter distribution width of not more than 20%, the distribution width being defined by

$$\text{grain diameter standard deviation / average diameter x 100 =}$$

$$\text{distribution width (\%)}$$

wherein the above average grain diameter and the grain diameter standard deviation are to be found from the earlier defined ri.

The monodisperse emulsion can be obtained by adding an aqueous silver salt solution and an aqueous halide solution under controlled pAg and pH conditions according to a double-jet precipitation method. For determination of the addition rate, reference can be made to JP-A Nos. 54-48521 and 58-49938. To obtain a high monodisperse emulsion, there can be used the method for growing the grain in the presence of a tetrazaindene compound, which was disclosed in JP-A No. 60-122935. In addition, it is also preferable to add two or more kinds of mono-dispersed emulsions in one sensitive layer.

The grain size in each emulsion layer of the photographic material of the present invention can be determined from a wide range, considering various properties including performance thereof, specifically, its sensitivity, sensitivity balance, color separation sharpness and graininess. In one preferable embodiment of the present invention, the grain size of silver halide is preferably 0.1 through 0.6 μm for the red-sensitive layer emulsion, 0.15 μm through 0.8 μm for the green-sensitive layer emulsion and 0.3 through 1.2 μm for the blue-sensitive layer emulsion.

In the photographic material of the present invention, it is preferable to contain a nitrogen-containing heterocyclic compound having a mercapto group. The preferable compounds are those represented by Formula [XI] described in JP-A No. 6-95283, page 19, right column, line 20th through 49th. The more preferable compounds are those represented by Formula [XII], Formula [XIII] and [XIV] described in the above-mentioned specification, page 20, left column, line 5th through page 20, right column, line 2nd. Exemplary examples of the compounds include Compounds (1) through (39) described in JP-A No. 64-73338, page 11 through page 15.

The addition amount of the above-mentioned mercapto compound may optionally be varied depending of the kind of compounds used and the added layer. Ordinarily, when added to the silver halide emulsion layer, it is preferable to be $10^{-8}$ through $10^{-2}$ mol and more preferable to be $10^{-6}$ through $10^{-3}$ mol.

Yellow image forming, magenta image forming and cyan image forming silver halide emulsion layers respectively contain a silver halide emulsion each having a spectral sensitivity wavelength region different from the other. Furthermore, preferably contained in at least one of the yellow image forming, magenta image forming and cyan image forming silver halide emulsion layers is a silver halide emulsion having sensitivity in common with at least a part of the sensitivity of each of the yellow image forming, magenta image forming and cyan image forming silver halide emulsion layers.

Preferred magenta couplers used in the present invention are compounds represented by [M-1] described in JP-A No. 95283/1994, page 7, right column in terms of superior spectral absorption properties of coloring dyes. Practical example of preferable compounds include compounds M-1 through M-19 described in the above-mentioned specification, page 8 through page 11. In addition, as other examples, compounds M-1 through M-61 described in European Patent No. 0,273,712, pp. 6 through 21 and compounds 1 through 223 described in European Patent No. 0,235,913, pp. 36 through 92, except those described above. The above-mentioned couplers may be used in combination with other kinds of magenta couplers. Ordinarily, they can be used preferably in a range of 1 x $10^{-3}$ through 1 mol and more preferably in a range of 1 x $10^{-2}$ through 8 x $10^{-1}$ mol per mol of silver halide.

In the photographic material of the present invention, spectral absorption $\lambda_{L0.2}$ of the magenta image is preferably 580 through 635 nm. In the photographic materials whose $\lambda_{L0.2}$ is 580 through 635 nm, $\lambda$max of the spectral absorption of the magenta image is preferably 530 through 560 nm.

Here, $\lambda_{L0.2}$ and $\lambda$max of the spectral absorption of the magenta image of the photographic material of the present invention are measured by the following methods. (Measurement method of $\lambda_{L0.2}$ and $\lambda$max)

In the case of a positive type, the photographic material of the present invention is uniformly exposed to red light in a minimum amount capable of obtaining the minimum density of the cyan image and is also uniformly exposed to blue light a minimum amount capable of obtaining the minimum density of the yellow image. Following this, a white light is irradiated through an ND filter, and then, when the photographic material is subjected to photographic processing, an integrating sphere is mounted to a spectrophotometer and the value is corrected to zero by means of a standard

white plate made of magnesium oxide. A magenta image is prepared by adjusting the density of the ND filter in such a manner that the maximum value of absorbance when spectral absorption of 500 through 700 nm is measured. In the case of the negative type, a photographic material is exposed to a green light through the ND filter. When the photographic material is subjected to photographic processing to form a magenta image, the density of the ND filter is adjusted to the same maximum absorbance as the above-mentioned positive type. $\lambda_{L0.2}$ is defined as a wave longer than a wavelength wherein the maximum absorbance shows 1.0 in the spectral absorbance curve and its absorbance shows 0.2.

It is preferable that a yellow coupler be contained, in addition to a magenta coupler, in the magenta image forming layer of the photographic material of the present invention. The difference of pKa of the above-mentioned couplers is preferably within 2 and more preferably within 1.5. The preferable yellow coupler contained in the magenta image forming layer of the present invention is a coupler represented by Formula [Y-Ia] described in JP-A 6-95283, page 12, right column. Of the couplers represented by the above-mentioned specification, the more preferable ones are those having a pKa value which is not lower than that of a coupler represented by a combined coupler [M-1] by 3, when it is combined with a magenta coupler represented by [M-1].

Practical examples of preferable compounds include, in addition to compounds Y-1 and Y-2 described in JP-A No. 6-95283, compounds (Y-1) through (Y-58) described in JP-A No. 139542/1990, pp. 13 through 17, but the compounds are not limited these compounds.

As a cyan coupler contained in the cyan image forming layer according to the present invention, conventional types such as phenol, naphthol or imidazole couplers can be used. Typically, phenol type couplers which are each substituted by an alkyl group, an acylamino group or a ureido group, naphthol type couplers formed from a 5-aminonaphthol nucleus and a two-equivalent type couplers having an oxygen atom- introduced leaving group. Of these, preferable compounds include those represented by Formula [C-I] and [C-II] described in JP-A No. 95283/1994, page 13. The cyan coupler is incorporated in an amount $1x10^{-3}$ to 1 mol, preferably $1x10^{-2}$ to $8x10^{-1}$ per mol of silver halide.

As a yellow dye forming coupler, a conventional acylacetoanilide type coupler can preferably be used. Examples of preferable couplers include those represented by Formula [Y-1] described in JP-A No. 6-95283, page 21. Practical examples of the above-mentioned couplers are preferably compounds described in JP-A No. 3-241345, pp. 5 through 9 and compounds represented by Y-I-1 through Y-I-55. In addition, compounds described in JP-A No. 3-209466, pp. 11 through 14 and compounds represented by Y-1 through Y-30 are also preferably used.

In the present invention, $\lambda$max of the yellow image is not less than 425 μm and $\lambda_{L0.2}$ of the yellow image is preferably 515 nm or less. The $\lambda_{L0.2}$ of the present invention is defined by JP-A No. 6-95283, page 21, right column line 1 through 24. It refers to the size of unnecessary absorption at longer wavelength side in the spectral absorption property of the yellow dye image.

The above-mentioned yellow couplers are preferably 1 x $10^{-3}$ through 1 mol, and more preferably 1 x $10^{-2}$ through 8 x $10^{-1}$ mol per mol of silver halide in the silver halide emulsion layer.

In order to adjust spectral absorption property of the magenta, cyan and yellow images as described above, it is preferable to add a compound having a color tone adjusting effect. Preferred examples of such compounds include compounds represented by [HBS-I] and [HBS-II] described in JP-A No. 6-95283, page 22 are preferable, and compounds represented by Formula [HBS-II] described in the above-mentioned specification, page 22.

The yellow image forming layer, the magenta image forming layer and the cyan image forming layer relating to the present invention are coated on a support with an arbitrary order of coating from the support. One preferable embodiment is that, from the support, are the cyan image forming layer, the magenta image forming layer and the yellow image forming layer. In addition, if necessary, a black image forming layer, an intermediate layer, a filter layer and a protective layer may also be provided.

To each of the above-mentioned couplers, to prevent color fading of the formed dye image due to light, heat and humidity, an anti-fading agent may be added singly or in combination. The preferable compounds or a magenta dye are phenyl ether type compounds represented by Formulas I and II in JP-A No. 2-66541, phenol type compounds represented by Formula IIIB described in JP-A No. 3-174150, amine type compounds represented by Formula A described in JP-A No. 64-90445 and metallic complexes represented by Formulas XII, XIII, XIV and XV described in JP-A No. 62-182741. The preferable compounds to form a yellow dye and a cyan dye are compounds represented by Formula I' described in JP-A No. 1-196049 and compounds represented by Formula II described in JP-A No. 5-11417.

When an oil-in-water type-emulsifying dispersion method is employed for adding couplers and other organic compounds used for the photographic material of the present invention, in a water-insoluble high boiling organic solvent, whose boiling point is 150°C or more, a low boiling and/or a water-soluble organic solvent are combined if necessary and dissolved. In a hydrophilic binder such as an aqueous gelatin solution, the above-mentioned solutions are emulsified and dispersed by the use of a surfactant. As a dispersing means, a stirrer, a homogenizer, a colloidal mill, a flow jet mixer and a supersonic dispersing machine may be used.

After dispersion, or concurrently with dispersion, a step to remove a low boiling organic solvent may be introduced. Preferred examples of the high boiling organic solvent capable of being used for dissolving a coupler for dispersion include phthalic acid esters such as dioctylphthalate, diisodecylphthalate and dibutylphthalate, phosphoric acid ester such as tricresyl phosphate and trioctylphosphate and phosphine oxides such as trioctyl phosphine oxide. The dielectric constant of the high boiling organic solvent is preferably 3.5 to 7. In addition, two or more kinds of the high boiling organic solvent may be used in combination.

As a high boiling organic solvent, the specifically preferable compounds are those represented by [HBS-I] and [HBS-II] described in JP-A No. 6-95283, page 22, and more specifically preferable compounds are those represented by [HBS-II]. Practical compounds are compounds I-1 through II-95 described in JP-A No. 2-124568, page 53 through 68.

As a surfactant used for adjusting surface tension when dispersing or coating photographic additives, the preferable compounds are those containing a hydrophobic group having 8 through 30 carbon atoms and a sulfonic acid group or its salts in a molecule. Exemplary examples thereof include A-1 through A-11 described in JP-A No. 64-26854. In addition, surfactants, in which a fluorine atom is substituted to an alkyl group, are also preferably used. The dispersion is conventionally added to a coating solution containing a silver halide emulsion. The elapsed time from dispersion until addition to the coating solution and the time from addition to the coating solution until coating are preferably short. They are respectively preferably within 10 hours, more preferably within 3 hours and still more preferably within 20 minutes.

It is preferable that a compound reacting with the oxidation product of a color developing agent be incorporated into a layer located between light-sensitive layers for preventing color staining and that the compound is added to the silver halide emulsion layer to decrease fogging. As a compound for such purposes, hydroquinone derivatives are preferable, and dialkylhydroquinone such as 2,5-di-t-octyl hydroquinone are more preferable. The specifically preferred compound is a compound represented by Formula II described in JP-A No. 4-133056, and compounds II-1 through II-14 described in the above-mentioned specification pp. 13 through 14 and compound 1 described on page 17.

In the photographic material according to the present invention, it is preferable that static fogging is prevented and light-durability of the dye image is improved by adding a UV absorber. The preferable UV absorber is benzotriazoles. The specifically preferable compounds are those represented by Formula III-3 in JP-A No. 1-250944, those represented by Formula III described in JP-A No. 64-66646, UV-1L through UV-27L described in JP-A No. 63-187240, those represented by Formula I described in JP-A No. 4-1633 and those represented by Formulas (I) and (II) described in JP-A No. 5-165144.

It is also to incorporate an oil-soluble dye or a pigment to improve white background. Preferred examples of the oil-soluble dye are compounds 1 through 27 described in JP-A No 2-842, page 8 to 9.

In the photographic material used in the invention, gelatin is preferably used as a binder. Specifically, gelatin, extraction solution of which is subjected to hydrogen peroxide treatment to remove colored components of gelatin; ossein gelatins which are extracted from hydrogen peroxide-treated raw material ossein or manufactured from uncolored raw bone, are preferably used to enhance transmittance. Gelatin used for the present invention may be any of an alkaline-processed ossein gelatin, an acid-processed gelatin, gelatin derivatives and modified gelatins. Specifically, the alkaline-processed ossein gelatin is preferable. The transmittance of the gelatin used in the photographic material relating to the present invention is preferably 70% or more, when a 10% solution is prepared and its transmittance at 420 nm is measured by the use of a spectrophotometer.

The jelly strength of the gelatin used in the present invention (measured by means of a PAGI method) is preferably 250 or more, and more preferably 270 g or more.

The total weight of gelatin contained on the image forming side of the photographic material according to the present invention is preferably less than 11 $g/m^2$. With regard to a lower limit, there is no specific limit. However, 3.0 $g/m^2$ or more is preferable in terms of photographic performance. The amount of gelatin is calculated in conversion to the weight of gelatin having moisture content of 11.0% when measured through a moisture measurement method described in the PAGI method. The ratio of gelatin to total gelatin coated is not specifically limited, but is preferably 20 to 100%.

As a hardener for the binders, a vinylsulfone type hardener and a chlorotriazine type hardener are preferably used independently or two or more of them are used in combination. Compounds described in JP-A Nos. 61-249054 and 61-245153 are preferably employed. It is also preferable to add antiseptics and anti-mildew agents described in JP-A No. 3-157646 in a colloidal layer to prevent propagation of mildew and bacteria which adversely affect photographic performance and image storage stability.

In the photographic material of the present invention, the reflection density of a unprocessed sample at the wavelength of the spectral sensitivity maximum of the cyan image forming silver halide emulsion layer is preferably 0.7 or more.

The photographic material of the present invention is obtained by incorporating a colorant material such as a dye having absorption at the above-mentioned wavelengths and black colloidal silver in any of photographic structural layers of the present invention. In the photographic material of the present invention, a water-soluble dye may be added to an arbitrary silver halide emulsion layer and/or other hydrophilic colloid photographic structural layer. In addition, in

the photographic material of the present invention, a dye having at least one of a carboxyl group, a sulfonamide group and a sulfamoyl group may be incorporated by solid-dispersion in an arbitrary silver halide emulsion layer and/or other hydrophilic colloid photographic structural layer. Examples of the dye having at least one of a carboxyl group, a sulfonamide group and a sulfamoyl group include compounds represented by Formulas [I] through [IX] described in JP-A No. 6-95283, pp. 14 through 16.

Examples of the dyes represented by the above-mentioned Formula [I] through [VIII] include compounds I-1 through VIII-7 described in JP-A No. 4-18545 are cited, but is not limited to these.

There is also specifically no limit to a layer to which the above-mentioned dyes and colloidal silver are incorporated. However, it is preferable that they be incorporated to a non-sensitive hydrophilic colloidal layer between the support and an emulsion layer closest to the support.

The silver halide used the present invention may be spectrally sensitized by the use of conventional sensitizing dye(s). Combined use of sensitizing dyes used for supersensitization of an internal latent image forming silver halide emulsion and a negative type silver halide emulsion is also useful for the silver halide emulsion of the present invention. With regard to sensitizing dyes, Research Disclosure (hereinafter, abbreviated as RD) 15162 and 17643 are referred.

To the photographic material according to the present invention, it is preferable to add compounds which adjust the gradation of the toe portion of a characteristic curve. The preferable compounds are those represented by Formula [AO-II] described in JP-A No. 6-95283, page 17. As an example of preferable compounds, compounds II-1 through II-8 described on page 18 of the above-mentioned specification are given. The added amount of the above-mentioned [AO-II] is preferably 0.001 to 0.50 g/m$^2$, and more preferably 0.005 to 0.20 g/m$^2$. The compound may be used singly or in combination. In addition, a quinone derivative having a 5 or more carbon atoms may be added to the compound of [AO-II]. However, in any cases, the amount used is preferably in a range of 0.001 through 0.50 g/m$^2$ in total.

It is preferable to incorporate a fluorescent brightening agent into the photographic material of the present invention and/or a processing solution which processes the photographic material of the present invention in terms of improving white background.

The developing solution, the bleach-fixing solution and the stabilizing solution can process a photographic material continuously while respectively replenishing the developing solution, the bleaching solution, the bleach-fixing solution and the stabilizing solution. In the present invention, the replenishing rate of the developing solution is preferably 700 cc or less and more preferably 500 cc or less per 1 m$^2$ of the photographic material. In such cases, the present invention provides effective result. In the case of other processing solutions too, the replenishing amount of the developing solution is preferably 700 cc or less and more preferably 500 cc or less per 1 m$^2$ of the photographic material. In such cases, the present invention can provide effective result. The preferred developing agent usable in the developing solution for developing the photographic material of the present invention include ordinary silver halide developing agents such as hydroquinone, hydroxybenzenes, aminophenols, 3-pyrazolones, ascorbic acid and its derivatives, reductones, phenylenediamines, and mixtures thereof. Specifically, cited are hydroquinone, aminophenol, N-methylaminophenol, 1-phenyl-3-pyrazolidone, 1-phenyl-4,4-dimethyl-3-pyrazolidone, 1-phenyl-4-methyl-4-hydroxymethyl-3-pyrazolidone, ascorbic acid, N,N-diethylaminotoluidine, 4-amino-3-methyl-N-ethyl-N-(p-methanesulfonamidoethyl)-aniline, 4-amino-3-methyl-N-ethyl-N-(β-hydroxyethyl)aniline, 4-amino-N-ethyl-N-(β-hydroxyethyl)aniline and 4-amino-3-methyl-N-ethyl-N-(γ-hydroxypropyl)aniline.

It is also possible to incorporate any of these developing agent into the silver halide emulsion to have the developing agent reacted with the silver halide while immersed in a high pH aqueous solution.

The developing solution used in the present invention may further contain a specific antifogging agent and the development restrainer. Alternatively, it is possible to arbitrarily incorporate such photographic additives used for a developing solution into the component layer(s) of the photographic photographic material.

For the silver halide photographic photographic material in the present invention there may be used any of known photographic additives. The above-referred to known photographic additives include the following compounds described in Research Disclosure RD 17643, page 23, item III to page 29, item XXI and RD 18716, pages 648-651.

To form an image using the photographic material of the present invention, it is preferable to employ a light source unit scanning exposure type automatic processing machine. As practical example of such equipment or system for forming a specifically preferable image, Konsensus L, Konsensus 570 and Konsensus II are cited.

It is preferable to apply the present invention to a photographic material wherein a developing agent is not incorporated in the photographic material. Specifically, it is preferable to apply the present invention to the photographic material having a reflective support to form an image for direct visual stimulation, cited, for example is the photographic material for color proofs.

## EXAMPLES

The present invention will be further explained based on examples, but the invention is not limited to these examples.

Example 1

Fig. 1 is a conceptual illustration of an exposure apparatus to which one embodiment of the exposure apparatus used in the invention is applicable. Laser lights radiated from laser light source unit (1), laser light source unit (2) and laser light source unit (3) are exposed, through an optical unit, onto a photographic material amounted on a rotating drum.

Fig. 2 is a conceptual illustration of a laser light source unit applicable in the invention. a laser light radiated from plural laser oscillators and having the same wavelength is exposed, as plural beam spots, onto a photographic material amounted on a rotating drum.

Fig. 3 is a conceptual illustration of an image forming apparatus relating to the invention. A silver halide photographic material which has been wound into roll and contained in a roomlight handling cartridge, is wound around a rotating drum and after exposure, is further subjected to processing to form a final image.

When forming halftone dot images in the apparatus having constitution described above, uniform, sharp images were stably be obtained.

Preparation of Emulsion EM-P1

To an aqueous ossein gelatin solution at a controlled temperature of 40° C were simultaneously added both an aqueous ammoniacal silver nitrate solution and an aqueous potassium bromide and sodium chloride solution (at a molar ratio of KBr: NaCl = 95:5) in a controlled double-jet precipitation process, whereby a cubic silver chlorobromide core grain emulsion having an average grain diameter of 0.30 μm was obtained. During addition, the pH and pAg were controlled so as to form cubic crystal grains.

To the obtained core grain emulsion further were simultaneously added an aqueous ammoniacal silver nitrate solution and an aqueous potassium bromide and sodium chloride solution (at a molar ratio of KBr:NaCl = 40:60) in the controlled double-jet precipitation process to continue formation of a shell phase to cover over the core grain of the above emulsion until reached the average grain diameter of 0.42 μm. During addition, the pH and pAg were controlled so that cubic grains were obtained. After subjecting to washing to remove water-soluble salts, gelatin was added thereto to obtain emulsion EM-P1. The distribution width of the grain diameter of the emulsion EM-P1 was 8%.

Preparation of Emulsion EM-P2

To an aqueous ossein gelatin solution at a controlled temperature of 40° C were simultaneously added both an aqueous ammoniacal silver nitrate solution and an aqueous potassium bromide and a sodium chloride solution (at a molar KBr:NaCl ratio of 95:5) in the controlled double-jet precipitation process, whereby a cubic silver chlorobromide grain emulsion having an average grain diameter of 0.18 μm was obtained. During addition, the pH and pAg were also controlled so that cubic silver halide grains can be obtained. To the core emulsion thus prepared were further simultaneously added an aqueous ammoniacal silver nitrate solution and an aqueous potassium bromide and a sodium chloride solution (at a molar KBr:NaCl ratio of 40:60) in the controlled double-jet precipitation process to form a shell phase until reached an average grain diameter of 0.25 μm. During addition, the pH and pAg were controlled so that cubic silver halide grains can be obtained. After the above prepared emulsion was subjected to washing to remove water-soluble salts, gelatin was added thereto to obtain emulsion EM-P2. The distribution width of the grain diameters of the emulsion EM-P2 was 8%.

Preparation of Blue-sensitive Silver Halide Emulsion

Emulsion EM-P1 was optimally spectral-sensitized by adding a sensitizing dye BS-1, followed by adding compound T-1 (4-hydroxy-6-methyl-1,3,3a,7-tetrazaindene) in an amount of 600 mg per mol of silver to obtain a blue-sensitive emulsion EM-B1.

Preparation of Green-sensitive Silver Halide Emulsion

A green-sensitive emulsion EM-G1 was prepared in the same manner as in the blue-sensitive emulsion Em-B1, except that in place of BS-1, sensitizing dye GS-1 was added to emulsion EM-P2 to optimally perform spectral sensitization. Preparation of Red-sensitive Silver Halide Emulsion

A red-sensitive emulsion EM-R1 was prepared in the same manner as in the blue-sensitive emulsion Em-B1, except that in place of BS-1, sensitizing dyes RS-1 and RS-2 were added to emulsion EM-P2 to optimally perform spectral sensitization.

BS−1

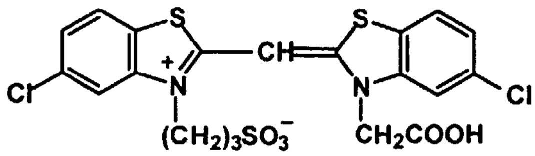

GS−1

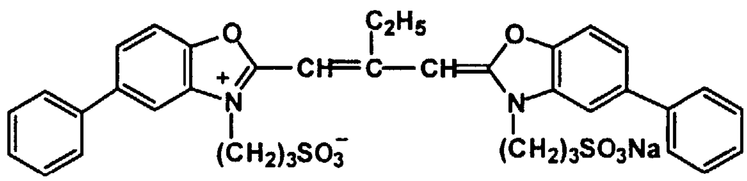

RS−1

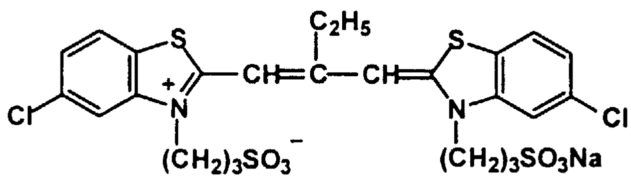

RS−2

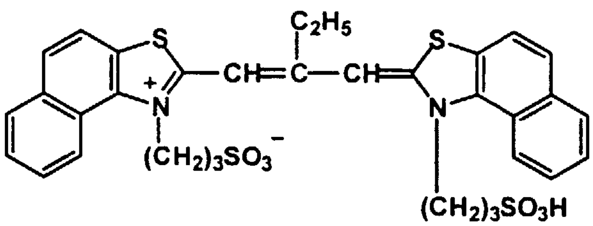

Preparation of Multilayer Silver halide Color Photographic Material

On a paper pulp reflective support of 115 g per $m^2$ in which a high density was laminated on one side and polyethylene containing a dispersed anatase type titanium oxide in a given amount of 15 weight % on the other side, using each of emulsions EM-B1, EM-G1 and EM-R1, each layer having the following constitution was coated on a side having the polyethylene layer containing titanium oxide, and on the opposite side, 6.00 g/$m^2$ of gelatin and 0.65 g/$m^2$ of a silica matting agent were coated. A multi-layered silver halide color photographic material sample was thus prepared, in which as a hardener, H-1 and H-2 were further added. As a coating aid and a dispersion aid, surfactants SU-1, SU-2 and SU-3 were also added.

| | |
|---|---|
| SU-1 | Sodium di-2-ethylhexyl sulfosuccinate |
| SU-2 | Sodium di(2,2,3,3,4,4,5,5-octafluoropentyl) sulfosuccinate |
| SU-3 | Sodium tri-i-propylnaphthalenesulfonate |
| H-1 | 2,4-Dichloro-6-hydroxy-s-triazine sodium salt |
| H-2 | Tetrakis(vinylsulfonylmethyl)methane |

Layer Constitution

The addition amount is represented in terms of a coating amount (g/m$^2$) and a coating amount of a silver halide emulsion is represented by equivalent converted to silver.

| | |
|---|---|
| 9th Layer (UV absorbing layer) | |
| Gelatin | 1.60 |
| UV absorbent (UV-1) | 0.070 |
| UV absorbent (UV-2) | 0.025 |
| UV absorbent (UV-3) | 0.120 |
| Silica matting agent | 0.01 |
| 8th Lyer (Blue sensitive layer) | |
| Gelatin | 1.10 |
| Blue sensitive emulsion (Em-B1) | 0.34 |
| Yelow coupler (Y-1) | 0.19 |
| Yelow coupler (Y-2) | 0.19 |
| Restrainer (T-1:T-2:T-3 = 1:1:1 in mol) | 0.004 |
| Antistaining agent (HQ-1) | 0.004 |
| High boiling agent (SO-1) | 0.30 |
| 7th Layer (Interlayer) | |
| Gelatin | 0.94 |
| Antistaining agent (HQ-2, HQ-3;in eq. wt.) | 0.02 |
| High boiling solvent (SO-2) | 0.05 |
| Antiirradiation dye (AI-3)*1 | |
| 6th Layer (Yellow colloidal silver layer) | |
| Gelatin | 0.45 |
| Yellow colloidal silver | 0.05 |
| Antistaining agent (HQ-1) | 0.03 |
| High boiling solvent (SO-2) | 0.008 |
| Polyvinyl pyrrolidone | 0.04 |
| 5th Layer (Interlayer) | |
| Gelatin | 0.45 |
| Antistaining agent (HQ-2) | 0.014 |
| Antistaining agent (HQ-3) | 0.014 |
| High boiling solvent (SO-2) | 0.006 |
| 4th Layer (green sensitive layer) | |
| Gelatin | 1.25 |
| Green sensitive emulsion (Em-G1) | 0.37 |
| Magenta coupler (M-1) | 0.25 |
| Yellow coupler (Y-3) | 0.06 |

*1: Photographic material samples 1-1 to 1-6 were prepared, in each of which amounts of the anti-irradiation dyes described above were adjusted so as to form an optimal image with respect to the laser exposure output as shown in Table 1.

(continued)

| | |
|---|---|
| 9th Layer (UV absorbing layer) | |
| 4th Layer (green sensitive layer) | |
| Antistaining agent (HQ-1) | 0.035 |
| Restrainer (T-1:T-2:T-3 = 1:1:1 in mol) | 0. |
| High boiling agent (SO-1) | 0.38 |
| 3rd Layer (Interlayer) | |
| Gelatin | 0.80 |
| Antistaining agent (HQ-2) | 0.03 |
| Antistaining agent (HQ-3) | 0.01 |
| Anti-irradiation dye (AI-1) | *1 |
| 2nd Layer (Red sensitive layer) | |
| Gelatin | 0.90 |
| Red sensitive emulsion (Em-R1) | 0.35 |
| Cyan coupler (C-1) | 0.20 |
| Cyan coupler (Exemplified compd. 1-18) | 0.20 |
| Antistaining agent (HQ-1) | 0.02 |
| Restrainer (T-1:T-2:T-3 = 1:1:1 in mol) | 0.002 |
| High boiling agent (SO-1) | 0.18 |
| 1st Layer (White pigment containing layer) | |
| Gelatin | 1.20 |
| Liquid paraffin | 0.55 |
| Anti-irradiation dye (AI-2) | *1 |
| Titanium oxide | 0.50 |

*1: Photographic material samples 1-1 to 1-6 were prepared, in each of which amounts of the anti-irradiation dyes described above were adjusted so as to form an optimal image with respect to the laser exposure output as shown in Table 1.

Support

Polyethylene-laminated paper containing a small amount of colorant.

| | |
|---|---|
| SO-1 | Tri(n-octyl)phosphine oxide |
| SO-2 | Di (i-decyl)phthalate |
| HQ-1 | 2,5-Di(t-butyl)hydroquinone |
| HQ-2 | 2,5-Di[(1,1-dimethyl-4-hexyloxycarbonyl)butyl]-hydroquinone |
| HQ-3 | Mixture of 2,5-di-sec-dodecylhydroquinone, 2,5-di-sec-tetradecylhydroquinone and 2-sec-dodecyl-5-sec-tetradecylhydroquinone (wt. ratio 1:1:2) |
| T-1 | 4-Hydroxy-6-methyl-1,3,3a,7-tetrazaindene |
| T-2 | 1-(3-Acetoamidophenyl)-5-mercaptotetrazole |
| T-3 | N-Benzyladenine |

Y—1

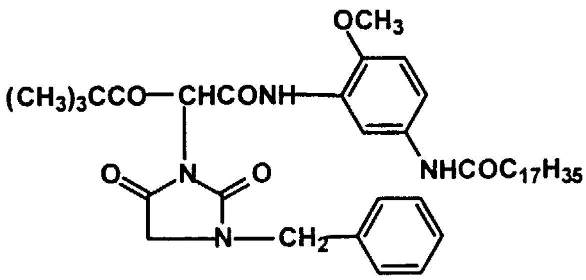

Y—2

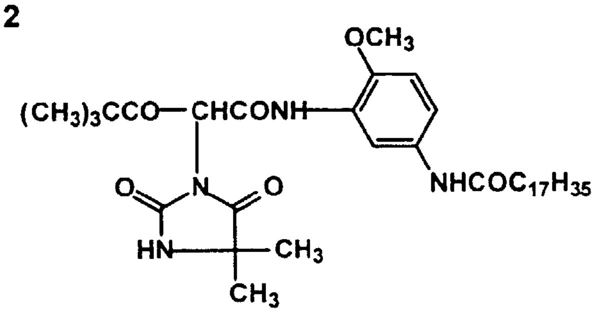

Y—3

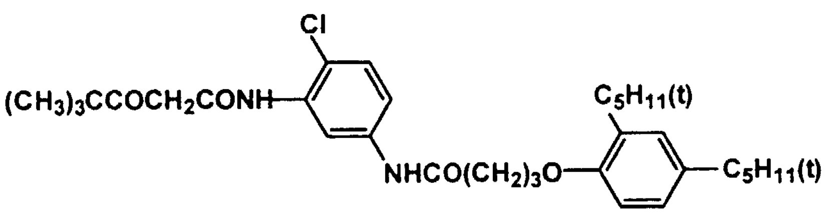

M—1

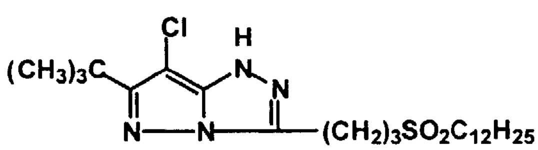

C−1

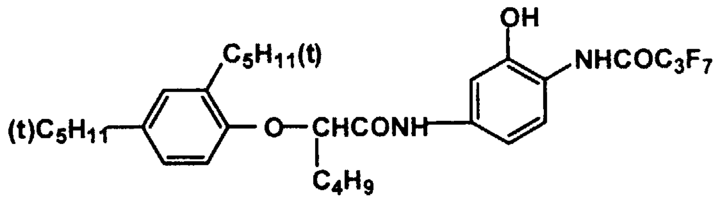

UV−1

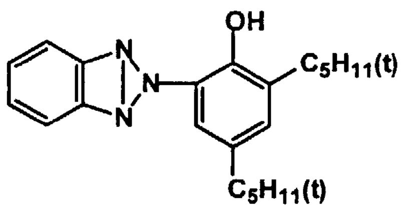

UV−2

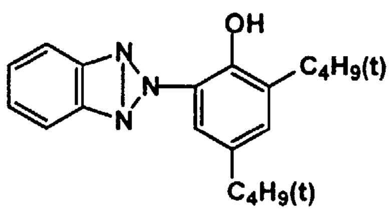

UV−3

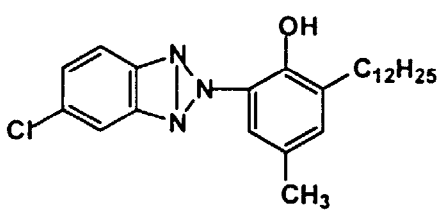

AI−1

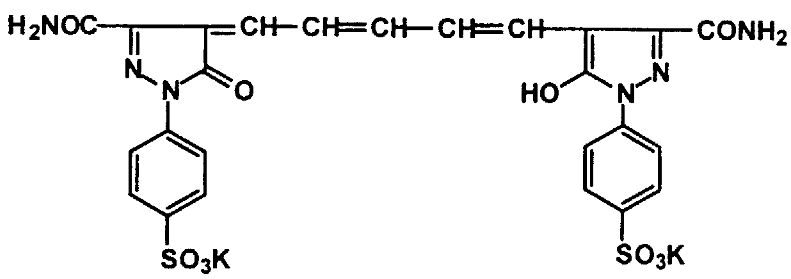

AI−2

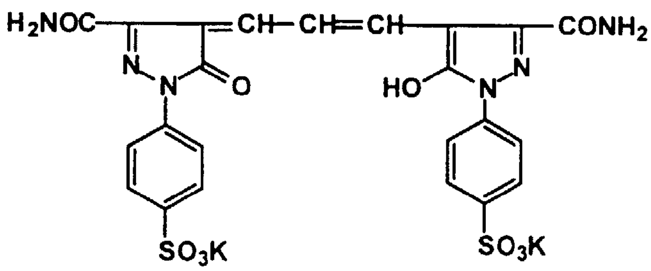

AI−3

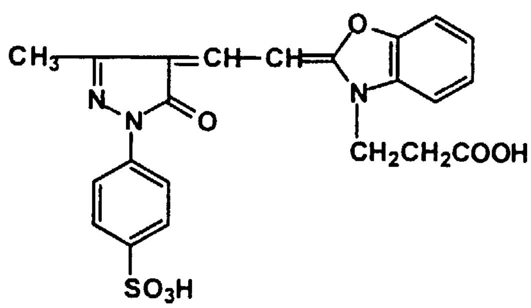

The photographic material samples thus prepared were each exposed to laser light at an exposure output as shown in Table 1. Exposure was made, using as the laser light source, a blue helium-cadmium laser (441 nm), a green helium-neon laser (544 nm) and a red semiconductor laser (AlGaInAs: ca. 670 nm). In Samples 1-1 to 1-6, the ratio of the blue laser output (converted to the wattage, W) to the red laser output (converted to the wattage, W) was varied as shown in Table 1. Herein, for example, when the blue laser is modulated to perform imagewise exposure, the maximum value of the exposing light output range necessary for yellow image density modulation corresponding to the blue laser is to be the exposing light output of the blue laser unit. In this Example, as positive images are formed, the minimum value of the exposing light output giving a minimum density (Dmin) is the exposing light output of the blue laser unit. Similarly, the minimum value of the exposing light output necessary for giving the minimum value of the cyan image density obtained in response to the red laser is the exposing light output of the red laser unit. Further, the number of the red laser was varied as shown in Table 1, provided that the beam diameter of the red laser was 10 µm on the exposed surface.

Thereafter, exposed samples were further subjected to processing according to process-1 as shown below. In this Example, an neutral image having yellow (Y), magenta (M) and cyan (C), each density of 1.0 was outputted and

was evaluated with respect to image density uniformity. In this case, the symbol "A" indicates an acceptable quality level with respect to uniformity and "B" indicates unacceptable quality level due to marked non-uniformity. Further, the exposure time was measured and evaluated based on the following criteria. The symbol "A" indicates exposure time being permitted for the shortest period, "B" indicates exposure time being at an acceptable level and "C" indicates that exposure needs a long period of time and unacceptable in productivity. To record images, the photographic material was mounted in close contact with the rotating drum by evacuation and subjected to horizontal and vertical exposure at a speed of 2,000 rpm.

| Process-1 Processing step | Temperature | Time |
|---|---|---|
| Immersing in developing solution | 37°C | 12 seconds |
| Light fogging | - | 12 seconds |
| Developing | 37°C | 95 seconds |
| Bleach-fixing | 35°C | 45 seconds |
| Stabilizing | 25-30°C | 90 seconds |
| Drying | 60-85°C | 40 seconds |

Compositions of the processing solutions

| Color developing solution | |
|---|---|
| Benzyl alcohol | 15.0 ml |
| Ceric sulfate | 0.015 g |
| Ethylene glycol | 8.0 ml |
| Potassium sulfite | 2.5 g |
| Potassium bromide | 0.6 g |
| Sodium chloride | 0.2 g |
| Potassium carbonate | 25.0 g |
| T-1 | 0.1 g |
| Hydroxylamine sulfate | 5.0 g |
| Sodium diethylenetriaminepentaacetate | 2.0 g |
| 4-amino-N-ethyl-N-(β-hydroxyethyl)aniline sulfate | 4.5 g |
| Brightening agent (4,4'-diaminostilbene-disulfonic acid derivative) | 1.0 g |
| Potassium hydroxide | 2.0 g |
| Diethylene glycol | 15.0 ml |
| Water to make | 1000 ml |
| The pH was adjusted to 10.15. | |

| Bleach-fixing solution | |
|---|---|
| Ferric ammonium diethylenetriaminepentaacetate | 90.0 g |
| Diethylenetrimainepentaacetic acid | 3.0 g |
| Ammonium thiosulfate (70% aqueous solution) | 180.0 ml |
| Ammonium sulfite (40% aqueous solution) | 27.5 ml |
| 3-mercapto-1,2,4-triazole | 0.15 g |
| Water to make | 1000 ml. |
| The pH was adjusted to 7.1 with potassium carbonate or glacial acetic acid | |

| Stabilizing solution | |
|---|---|
| O-Phenylphenol | 0.3 g |

(continued)

| Stabilizing solution | |
| --- | --- |
| Potassium sulfite (50% aqueous solution) | 12.0 ml |
| Ethylene glycol | 10.0 g |
| 1-hydroxyethylidene-1,1-diphosphonic acid | 2.5 g |
| Bismuth chloride | 0.2 g |
| Zinc sulfate, heptahydrate | 0.7 g |
| Ammonium hydroxide (28% aqueous solution) | 2.0 g |
| Polyvinylpyrrolidone (K-17) | 0.2 g |
| Brightening agent (4,4'-diaminostilbene-disulfonic acid derivative) | 2.0 g |
| Water to make | 1 liter, |

The pH was adjusted to 7.5 with ammonium hydroxide or sulfuric acid. The stabilization treatment was performed using the double bath counterflow system.

The following are the compositions of replenishers necessary for conducting a continuous run of processing.

| Color developing replenisher. | |
| --- | --- |
| Benzyl alcohol | 18.5 ml |
| Ceric sulfate | 0.015 g |
| Ethylene glycol | 10.0 ml |
| Potassium sulfite | 2.5 g |
| Potassium bromide | 0.3 g |
| Sodium chloride | 0.2 g |
| Potassium carbonate | 25.0 g |
| T-1 | 0.1 g |
| Hydroxylamine sulfate | 5.0 g |
| Sodium diethylenetriaminepentaacetate | 2.0 g |
| 4-Amino-N-ethyl-N-(β-hydroxyethyl)aniline sulfate | 5.4 g |
| Brightening agent (4,4'-diaminostilbene-disulfonic acid derivative) | 1.0 g |
| Potassium hydroxide | 2.0 g |
| Diethylene glycol | 18.0 ml |
| Water to make | 1 liter, |
| The pH was adjusted to 10.35. | |
| Bleach-fixing replenisher | |
| The same as the foregoing bleach-fixing solution. | |
| Stabilizing replenisher | |
| The same as the foregoing stabilizing solution. | |

The replenishing rate of each of the developing replenisher, bleach-fixing replenisher or stabilizing replenisher was 320 ml per $m^2$ of photographic material. Using Konsensus 570 available from Konica Corporation, color proofs composed of halftone dot images were prepared. The processing was continuously run until the total amount of color developing replenisher supplied reaches an amount that is 3 times the solution amount of the color developing tank.

Results are shown in Table 1.

Table 1

| Exo. No. | Sample No. | B/R output ratio | No. of red laser oscillator | Density uniformity | Exposure | time Remark |
| --- | --- | --- | --- | --- | --- | --- |
| 1-1 | 1-1 | 1/5 | 1 | A | C | Comp. |
| 1-2 | 1-2 | 1/5 | 3 | B | B | Comp. |

Table 1 (continued)

| Exo. No. | Sample No. | B/R output ratio | No. of red laser oscillator | Density uniformity | Exposure | time Remark |
|---|---|---|---|---|---|---|
| 1-3 | 1-3 | 1/15 | 1 | A | C | Comp. |
| 1-4 | 1-4 | 1/15 | 3 | A | B | Inv. |
| 1-5 | 1-5 | 1/30 | 10 | A | A | Inv. |
| 1-6 | 1-6 | 1/70 | 10 | A | A | Inv. |

As can be seen from Table 1, image-recorded samples according to the invention led to superior image uniformity and enhanced productivity.

Example 2

Preparation of Infrared-sensitive Silver Halide emulsion

A red-sensitive emulsion EM-IFR1 was prepared in the same manner as in the blue-sensitive emulsion Em-B1, except that in place of BS-1, sensitizing dyes IRS-1 and IRS-2 were added to emulsion EM-P2 to optimally perform spectral sensitization.

IRS−1

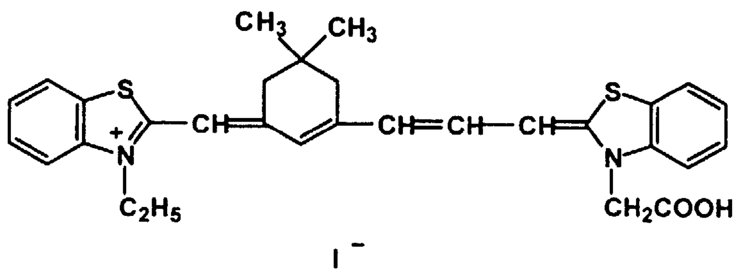

IRS−2

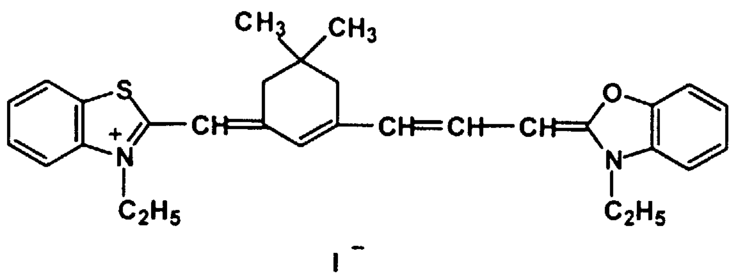

Preparation of Emulsion EM-P3

To an aqueous ossein gelatin solution at a controlled temperature of 40° C were simultaneously added both an aqueous ammoniacal silver nitrate solution and an aqueous potassium bromide and a sodium chloride solution (at a molar KBr:NaCl ratio of 95:5) in the controlled double-jet precipitation process, whereby a cubic silver chlorobromide grain emulsion having an average grain diameter of 0.18 μm was obtained. During addition, the pH and pAg were also controlled so that cubic silver halide grains can be obtained. To the core emulsion thus prepared were further simultaneously added an aqueous ammoniacal silver nitrate solution and an aqueous potassium bromide and a sodium chloride solution (at a molar KBr:NaCl ratio of 40:60) in the controlled double-jet precipitation process to form a shell phase until reached an average grain diameter of 0.25 μm, provided that to the halide (KBr/NaCl) solution was added

$K_2IrBr_6$ of $7x10^{-7}$ mol/Ag mol. During addition, the pH and pAg were controlled so that cubic silver halide grains can be obtained. After the above prepared emulsion was subjected to washing to remove water-soluble salts, gelatin was added thereto to obtain emulsion EM-P3. The distribution width of the grain diameters of the emulsion EM-P3 was 8%.

A silver halide emulsion, Em-R2 was prepared in the same manner as the emulsion of Em-R1, except that in place of emulsion Em-P2 was employed emulsion Em-P3.

On a paper pulp reflective support of 115 g per $m^2$ in which a high density was laminated on one side and polyethylene containing a dispersed anatase type titanium oxide in a given amount of 15 weight % on the other side, using each of emulsions EM-G1, EM-R1 and EM-IFR1, each layer having the following constitution was coated on a side having the polyethylene layer containing titanium oxide, and on the opposite side, 6.00 g/$m^2$ of gelatin and 0.65 g/$m^2$ of a silica matting agent were coated. A multi-layered silver halide color photographic material sample was thus prepared, in which as a hardener, H-1 and H-2 were further added. As a coating aid and a dispersion aid, surfactants SU-1, SU-2 and SU-3 were also added.

| Layer | Amount (g/$m^2$) |
|---|---|
| 8th Layer (UV absorbing layer) | |
| Gelatin | 1.60 |
| UV absorbent (UV-1) | 0.070 |
| UV absorbent (UV-2) | 0.025 |
| UV absorbent (UV-3) | 0.120 |
| Silica matting agent | 0.01 |
| 7th Layer (Green sensitive layer) | |
| Gelatin | 1.25 |
| Green sensitive emulsion (Em-G1) | 0.37 |
| Magenta coupler (M-1) | 0.25 |
| Antistaining agent (HQ-1) | 0.035 |
| Restrainer (T-1:T-2:T-3 = 1:1:1 in mol) | 0. |
| High boiling agent (SO-1) | 0.38 |
| 6th Layer (Interlayer) | |
| Gelatin | 0.80 |
| Antistaining agent (HQ-2) | 0.03 |
| Antistaining agent (HQ-3) | 0.01 |
| Antiirradiation dye (AI-1) | 0.04 |
| 5th Layer (Red sensitive layer) | |
| Gelatin | 0.90 |
| Red sensitive emulsion (Em-R1) | 0.35 |
| Cyan coupler (C-1) | Table 2 |
| Cyan coupler (Exemplified compd. 1-18) | Table 2 |
| Antistaining agent (HQ-1) | 0.02 |
| Restrainer (T-1:T-2:T-3 = 1:1:1 in mol) | 0.002 |
| High boiling agent (SO-1) | 0.18 |
| 4th Layer (Interlayer) | |
| Gelatin | 0.80 |
| Antistaining agent (HQ-2) | 0.03 |
| Antistaining agent (HQ-3) | 0.01 |
| Antiirradiation dye (AI-2) | 0.05 |
| 3rd Layer (Infrared sensitive layer) | |
| Gelatin | 1.10 |
| Infrared sensitive emulsion (Em-IRR1) | 0.34 |
| Yellow coupler (Y-1) | 0.19 |

(continued)

| Layer | Amount (g/m$^2$) |
|---|---|
| 3rd Layer (Infrared sensitive layer) | |
| Restrainer (T-1:T-2:T-3 = 1:1:1 in mol)<br>Antistaining agent (HQ-1)<br>High boiling agent (SO-1) | 0.004<br>0.004<br>0.30 |
| 2nd Layer (Interlayer) | |
| Gelatin<br>Antiirradiation dye (Table 2) | 1.20<br>0.05 |
| 1st Layer (Gray colloidal silver layer) | |
| Gelatin<br>Gray colloidal silver | 2.20<br>0.12 |
| Support | |
| Polyethylene-laminated paper containing a small amount of colorant. | |

Coating amounts of cyan couplers, C-1 and exemplified I-18, and the kind of a antiirradiation dye (AI dye) used in the photographic material described above are shown in Table 2.

Table 2

| Sample No. | Red sensitive emulsion | C-1 | I-18 | AI dye |
|---|---|---|---|---|
| 2-1 | Em-R1 | 0.35 | 0 | AI-4 |
| 2-2 | Em-R1 | 0 | 0.35 | AI-4 |
| 2-3 | Em-R2 | 0 | 0.35 | AI-4 |
| 2-4 | Em-R2 | 0 | 0.35 | AI-5 |

AI−4

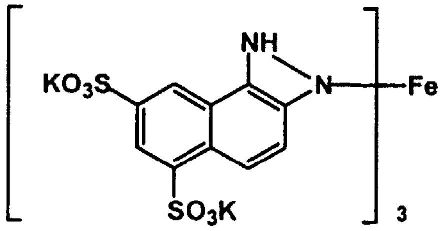

AI-5

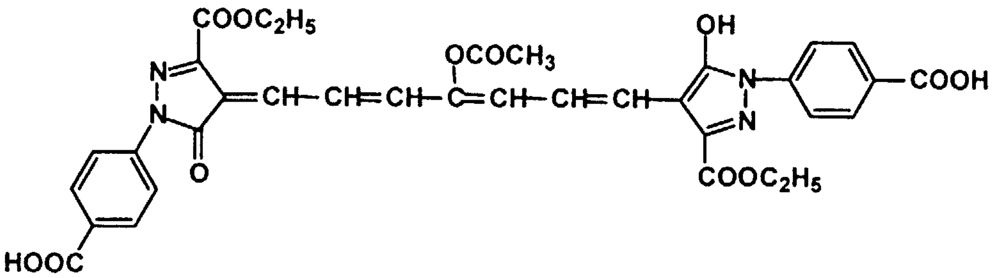

Using a laser scanning exposure apparatus described below, photographic materials described above each were subjected to infrared laser exposure corresponding a yellow halftone test chart image, green laser exposure corresponding a magenta halftone test chart image, red laser exposure corresponding a cyan halftone test chart image and mixed green, red and infrared laser exposure corresponding a black halftone test chart image. As a laser light source were employed a green laser of helium-neon laser (544 nm), red laser of a semiconductor laser (AlGaInAs: ca. 670 nm) and an infrared laser of a semiconductor laser (GaAlAs: ca. 780 nm). The photographic material was amounted in close contact with the rotating drum by evacuation and subjected to horizontal and vertical scanning exposure at a speed of 2,000 rpm. As to the exposing amount, the exposing light output of the green laser light source unit was 1 μW and that of the infrared light source unit was 15 μW. In this case, twelve infrared semiconductor lasers were arranged and the photographic material was simultaneously exposed to twelve laser light beams, provided that the laser beam diameter was 8 μm on the exposed surface. Then the photographic material was processed according to Process-1 described above. As to the spectral sensitivity peak of each emulsion layer of the photographic material, the green sensitive emulsion, red sensitive emulsion and infrared sensitive emulsion each had a spectral sensitivity maximum at 548 nm, 675 nm and 785 nm, respectively.

Images obtained as above were visually evaluated with respect to image uniformity and reproducibility of 2% halftone dots (i.e., small dot reproducibility), based on grades of 1 (markedly inferior), 2 (inferior) and 3 (superior). Evaluation was further made with respect to tone variation of a neutral image comprised of 10% and 50% dots of yellow, magenta and cyan (YMC). Results thereof are shown in Table 3. The above-described tone variation of the YMC halftone dot images was evaluated based on the following Dy and Dc:

$$Dy = \{(D_{B10}/D_{G10})/(D_{B50}/D_{G50})-1\}^2$$

$$Dc = \{(D_{R10}/D_{G10})/(D_{R50}/D_{G50})-1)^2$$

where $D_{B50}$, $D_{G50}$ and $D_{R50}$ each are respectively densities of yellow, magenta and cyan (YMC) 50% halftone dot images; and $D_{B10}$, $D_{G10}$ and $D_{R10}$ each are respectively densities of YMC 10% halftone dot images. This value indicates an extent of tone deviation of the image comprised of 10% halftone dots (gray approximation) from the image comprised of 50% halftone dots (gray approximation). The less the value, the less the tone variation in dot percentage and the more preferable.

Results are shown in Table 3.

Table 3

| Sample No. | Image uniformity | Small dot reproducibility | Gray tone deviation |
|---|---|---|---|
| 2-1 | 2.5 | 2.5 | 8.2 |
| 2-2 | 3 | 3 | 8.2 |
| 2-3 | 3 | 3 | 7.5 |
| 2-4 | 3 | 3 | 7.2 |

As can be seen from Table 3, it was proved that images obtained according to the invention exhibited little image non-uniformity, superior reproduction of each of YMC 2% halftone dots and little gray tone variation of the image formed of YMC halftone dots when the dot percentage was varied. Photographic material samples, each of which were wound into a roll and contained in a roomlight-handling cartridge, were pulled from the cartridge prior to exposure, cut to a given length, wound around a drum and subjected to exposure.

Example 3

On a paper support in which polyethylene was laminated on one side of raw paper of 115 g and polyethylene containing titanium oxide on the other side was coated each layer having the following constitution to prepare a multi-layer color photographic materials 3-1 to 3-4, provided that the content of an anti-irradiation dye used in the the 2nd layer (interlayer) was varied so that a raw material sample had a relection density as shown in Table 4.

| Layer | Amount ($g/m^2$) |
|---|---|
| 8th Layer (UV absorbing layer) | |
| Gelatin | 1.60 |
| UV absorbent (UV-1) | 0.070 |
| UV absorbent (UV-2) | 0.025 |
| UV absorbent (UV-3) | 0.120 |
| Silica matting agent | 0.01 |
| 7th Layer (Green sensitive layer) | |
| Gelatin | 1.25 |
| Green sensitive emulsion (Em-G2) | 0.37 |
| Restrainer (T-1:T-2:T-3 = 1:1:1 in mol) | 0. |
| Magenta coupler (M-1) | 0.25 |
| Yellow coupler (Y-1) | 0.06 |
| Antistaining agent (HQ-1) | 0.035 |
| High boiling agent (SO-1) | 0.38 |
| 6th Layer (Interlayer) | |
| Gelatin | 0.80 |
| Antistaining agent (HQ-2) | 0.03 |
| Antistaining agent (HQ-3) | 0.01 |
| Antiirradiation dye (AI-1), in an amount giving a reflection density as shown in Table 4 | |
| 5th Layer (Red sensitive layer) | |
| Gelatin | 0.90 |
| Red sensitive emulsion (Em-R2) | 0.35 |
| Cyan coupler (C-1) | 0.35 |
| Antistaining agent (HQ-1) | 0.02 |
| Restrainer (T-1:T-2:T-3 = 1:1:1 in mol) | 0.002 |
| High boiling agent (SO-1) | 0.18 |
| 4th Layer (Interlayer) | |
| Gelatin | 0.80 |
| Antistaining agent (HQ-2) | 0.03 |
| Antistaining agent (HQ-3) | 0.01 |
| Antiirradiation dye (AI-2) , in an amount giving a reflection density as shown in Table 4 | |
| 3rd Layer (Infrared sensitive layer) | |
| Gelatin | 1.10 |
| Infrared sensitive emulsion (Em-IRR2) | 0.34 |

(continued)

| Layer | Amount (g/m2) |
|---|---|
| 3rd Layer (Infrared sensitive layer) | |
| Yellow coupler (Y-1)<br>Restrainer (T-1:T-2:T-3 = 1:1:1 in mol)<br>Antistaining agent (HQ-1)<br>High boiling agent (SO-1) | 0.19<br>0.004<br>0.004<br>0.30 |
| 2nd Layer (Interlayer) | |
| Gelatin<br>Antiirradiation dye (AI-4) | 1.20<br>Table 4 |
| 1st Layer (Gray colloidal silver layer) | |
| Gelatin<br>Gray colloidal silver | 2.20<br>0.10 |
| Support | |
| Polyethylene-laminated paper containing a small amount of colorant. | |

Preparation of Green-sensitive Silver Halide Emulsion

To 1 liter of aqueous 2% gelatin solution kept at 40° C were simultaneously added the following solutions (Solutions A and B) while being maintained at a pAg of 7.3 and pH of 3.0, and further thereto were added Solutions C and D, while being maintained at a pAg of 8.0 and pH of 5.5. The pAg was controlled by the method described in JP-A 59-45437, and the pH was adjusted using aqueous sulfuric acid or sodium hydroxide solution.

| Solution A | |
|---|---|
| Sodium chloride<br>Potassium bromide<br>Water to make | 3.42 g<br>0.03 g<br>200 ml |
| Solution B | |
| Silver nitrate<br>Water to make | 10 g<br>200 ml |
| Solution C | |
| $K_2IrCl_6$<br>Sodium chloride<br>$K_4Fe(CN)_6$<br>Potassium bromide<br>Water to make | $2x10^{-8}$ mol/mol Ag<br>102.7 g<br>$1x10^{-5}$ mol/mol Ag<br>1.0 g<br>600 ml |
| Solution D | |
| Silver nitrate<br>Water to make | 300 g<br>600 ml |

After completing the addition, the resulting emulsion was desalted using a 5% aqueous solution of Demol N (produced by Kao-Atlas) and aqueous 20% magnesium sulfate solution, and redispersed in a gelatin aqueous solution to obtain a monodisperse cubic grain emulsion (EMN-1) having an average grain size of 0.43 µm, a coefficient of variation of grain size of 0.08 and a chloride content of 99.5 mol%.

The emulsion, EMN-1 was chemically sensitized at 60° C using the following compounds to obtain a green sensitive emulsion EM-G2 to obtain a green sensitive emulsion EM-G2.

| | |
|---|---|
| Sodium thiosulfate | 1.5 mg/mol AgX |

(continued)

| | |
|---|---|
| Chloroauric acid | 1.0 mg/mol AgX |
| Stabilizer STAB-1 | $6x10^{-4}$ mol/mol AgX |
| Stabilizer STAB-2 | $3x10^{-4}$ mol/mol AgX |
| Sensitizing dye GS-1 | $4x10^{-4}$ mol/mol AgX |

Preparation of Red-sensitive Silver Halide Emulsion

Further, a monodisperse cubic grain emulsion (EMN-2) having an average grain size of 0.5 µm, a coefficient of variation of grain size of 0.08 and a chloride content of 99.5 mol% was prepared in the same manner as in preparation of EMN-1, except that an adding time of Solutions A and B, and that of C and D were respectively varied.

The emulsion, EMN-2 was chemically sensitized at 60° C using the following compounds to obtaind a red-sensitive emulsion EM-R2.

| | |
|---|---|
| Sodium thiosulfate | 1.8 mg/mol AgX |
| Chloroauric acid | 2.0 mg/mol AgX |
| Stabilizer STAB-1 | $6x10^{-4}$ mol/mol AgX |
| Stabilizer STAB-2 | $3x10^{-4}$ mol/mol AgX |
| Sensitizing dye RS-1 | $2x10^{-4}$ mol/mol AgX |
| Sensitizing dye RS-2 | $2x10^{-4}$ mol/mol AgX |

Preparation of Infrared-sensitive Silver halide emulsion

The emulsion, EMN-2 was chemically sensitized at 60° C using the following compounds to obtaind an infrared-sensitive emulsion EM-IFR2.

| | |
|---|---|
| Sodium thiosulfate | 1.8 mg/mol AgX |
| Chloroauric acid | 2.0 mg/mol AgX |
| Stabilizer STAB-1 | $6x10^{-4}$ mol/mol AgX |
| Stabilizer STAB-2 | $3x10^{-4}$ mol/mol AgX |
| Sensitizing dye RS-1 | $1x10^{-4}$ mol/mol AgX |
| Sensitizing dye RS-2 | $1x10^{-4}$ mol/mol AgX |
| STAB-1 | 1-(3-Acetoamidophenyl)-5-mercaptotetrazole |
| STAB-2 | 1-Phenyl-5-mercaptotetrazole |
| STAB-3 | 1-(4-ethoxyphenyl)-5-mercaptotetrazole |

Using a laser scanning exposure apparatus described below, photographic material samples 3-1 to 3-4 each were subjected to infrared laser exposure corresponding a yellow halftone test chart image, green laser exposure corresponding a magenta halftone test chart image, red laser exposure corresponding a cyan halftone test chart image and mixed green, red and infrared laser exposure corresponding a black halftone test chart image. As a laser light source were employed a green laser of helium-neon laser (544 nm), red laser of a semiconductor laser (AlGaInAs: ca. 670 nm) and an infrared laser of a semiconductor laser (GaAlAs: ca. 780 nm). The photographic material was amounted in close contact with the rotating drum by evacuation and subjected to horizontal and vertical scanning exposure at a speed of 2,000 rpm. As to the exposing amount, the exposing light output of the green laser light source unit was 0.1 µW and that of the infrared light source unit was 20 µW. In this case, eight infrared semiconductor lasers were arranged and the photographic material was simultaneously exposed to eight laser light beams and processed according to Process-1 described below.

| Process-2 | | | |
|---|---|---|---|
| Step | Temperature | Time | Repl.rate* |
| Color developing | 37.0±0.3°C | 120 sec. | 300 cc |
| Bleach-fixing | 35.0±0.5°C | 45 sec. | 300 cc |
| Stabilizing | 30-35°C | 90 sec. | 600 cc |
| Drying | 50-80°C | 40 sec. | |

* : Replenishing rate

Processing solution compositions are as follows.

| Color developing solution | | |
|---|---|---|
| | Worker | Replenisher |
| Water | 800 cc | 800 cc |
| Triethylene diamine | 2 g | 3 g |
| Diethylene glycol | 10 g | 10 g |
| Potassium bromide | 0.2 g | 0.2 g |
| Potassium chloride | 3.5 g | - |
| Potassium sulfite | 0.25 g | 0.5 g |
| N-ethyl-(β-hydroxyethyl)-4-aminoanilinw sulfate | 3.0 g | 4.0 g |
| N,N-diethylhydroxyamine | 6.8 g | 6.0 g |
| Triethanolamine | 10.0 g | 10.0 g |
| Sodium diethylenetriamine-pentaacetate | 2.0 g | 2.0 g |
| Brightener (4,4'-diaminostilbene sulfonic acid derivative | 2.0 g | 2.5 g |
| Potassium carbonate | 30 g | 30 g |

Water is added to mahe a total volume of 1 liter and the pH is adjusted to 6.5 with potassium carbonate or glacial acetic acid.

| Bleach-fixing solution and replenisher solution | |
|---|---|
| Ammonium ferric diethylenetriaminepenta-acetate dihydride | 65 g |
| Diethylenetriaminepentaacetic acid | 3 g |
| Ammonium thiosulfate (70% aq. solution) | 100 ml |
| 2-Amino-5-mercapto-1,3,4-thiadiazole | 2.0 g |
| Ammonium sulfite (40% aq. solution) | 27.5 ml |

Water was added to make 1 liter and the pH was adjusted to 6.5 with potassium carbonate or glacial acetic acid.

| Stabilizing solution and replenisher solution | |
|---|---|
| o-Phenylphenol | 1.0 g |
| 5-Chloro-2-methyl-4-isothiazoline-3-one | 0.02 g |
| 2-Methyl-4-isothiazoline-3-one | 0.02 g |
| Diethylene glycol | 1.0 g |
| Brightener (Chinopal SFP) | 2.0 g |
| 1-Hydroxyethylidene-1,1-diphosphonic acid | 1.8 g |
| Sodium ethylenediaminetetraacetate | 1.5 g |
| Potassium sulfite | 5.0 g |
| Water was added to make 1 liter and the pH was adjusted to 8.0 with sulfuric acid or ammonia water. | |

Images thus obtained were visually evaluated with respect to image uniformity and reproducibility of 2% half-tone dots. Evaluation was further made with respect to tone variation of a neutral image comprised of 10% or 50%

black halftone dots. Results are shown in Table 4.

Table 4

| Sample No. | Reflection density | | | Image uniformity | Small dot reproducibility | Gray tone deviation |
|---|---|---|---|---|---|---|
| | 544nm | 670nm | 780nm | | | |
| 3-1 | 0.7 | 0.17 | 0.7 | 2 | 2 | 8.2 |
| 3-2 | 0.8 | 0.9 | 0.9 | 2 | 2 | 8.2 |
| 3-3 | 1.1 | 1.1 | 1.1 | 3 | 3 | 7.3 |
| 3-4 | 1.2 | 1.2 | 1.5 | 3 | 3 | 7.2 |

As can be seen from Table 4, it was proved that images obtained according to the invention exhibited little image non-uniformity, superior reproduction of each of YMC 2% halftone dots and little gray tone variation of the image formed of YMC halftone dots when the dot percentage was varied.

Example 4

Preparation of Emulsion EM-P5

To an aqueous ossein gelatin solution at a controlled temperature of 40° C were simultaneously added both an aqueous ammoniacal silver nitrate solution and an aqueous potassium bromide and a sodium chloride solution (at a molar KBr:NaCl ratio of 95:5) in the controlled double-jet precipitation process, whereby a cubic silver chlorobromide grain emulsion having an average grain diameter of 0.18 μm was obtained. During addition, the pH and pAg were also controlled so that cubic silver halide grains can be obtained. To the core emulsion thus prepared were further simultaneously added an aqueous ammoniacal silver nitrate solution and an aqueous potassium bromide and a sodium chloride solution (at a molar KBr:NaCl ratio of 40:60) in the controlled double-jet precipitation process to form a shell phase until reached an average grain diameter of 0.25 μm, provided that to the halide (KBr/NaCl) solution was added $K_2IrBr_6$ of $1.1x10^{-6}$ mol/Ag mol. During addition, the pH and pAg were controlled so that cubic silver halide grains can be obtained. After the above prepared emulsion was subjected to washing to remove water-soluble salts, gelatin was added thereto to obtain emulsion EM-P5. The distribution width of the grain diameters of the emulsion EM-P3 was 7%.

A silver halide emulsion, Em-IFR5 was prepared in the same manner as the emulsion of Em-IFR1 of Example 2, except that in place of emulsion Em-P2 was employed emulsion Em-R5.

Photographic materia samples 4-1 and 4-2 each were prepared in a manner similar to sample 2-2 of example 2, except that the infrared sensitive emulsion, Em-IFR1 used in the 3rd layer was replaced by emulsion Em-IRF5 described above. Similarly, samples 4-3 and 4-4 each were prepared, provided that the infrared sensitive emulsion used in the 3rd layer was Em-IRF1. The amount of the antiirradiation dye added to each sample was adjusted so as to obtain optimal images with respect to the laser light output ratio as shown in Table 5.

Using a laser scanning exposure apparatus as described below, photographic material sample 4-1 to 4-4 each were subjected to infrared laser exposure corresponding a yellow halftone test chart image, green laser exposure corresponding a magenta halftone test chart image, red laser exposure corresponding a cyan halftone test chart image and mixed green, red and infrared laser exposure corresponding a black halftone test chart image. In this case, the output ratio of the green laser to the infrared laser (G/IR output ratio) was varied as shown in Table 5, and the beam diameter of the infrared laser was also varied. As a laser light source were employed a green helium-neon laser (544 nm), a red semiconductor laser (AlGaInAs: ca. 670 nm) and an infrared semiconductor laser (GaAlAs: ca. 780 nm). The laser light output and the beam diameter were adjusted by adjusting the optical system. The photographic material was amounted in close contact with the rotating drum by evacuation and subjected to horizontal and vertical scanning exposure at a speed of 2,000 rpm. Eight infrared semiconductor lasers were arranged and the photographic material samples each were simultaneously exposed to eight laser light beams through an optical means. Further, the photographic material samples were processed according to Process-1 afore-described.

Images obtained as above were visually evaluated with respect to image uniformity, reproducibility of 2% halftone dots and tone variation of a neutral image comprised of 10% and 50% dots, in a manner similar to Example 2. Results thereof are shown in Table 5. It was further proved that when scanning-exposure was run with a laser beam of a diameter of less than 3 μm, it was hard to adjust the beam diameter to less than 3 μm and when exposure was repeated, reproducibility thereof was deteriorated and good images were not stably be obtained.

Table 5

| Exo. No. | Sample No. | G/IR output ratio | Beam diameter, μm | Image uniformity | Small dot reproducibility | Gray tone | Remark |
|---|---|---|---|---|---|---|---|
| 4-1 | 4-1 | 1/11/1/1 | 6 | 2 | 3 | 9.1 | Comp. |
| 4-2 | 4-2 | 5 | 6 | 3 | 3 | 7.5 | Inv. |
| 4-3 | 4-3 | 1/7 | 6 | 3 | 3 | 7.4 | Inv. |
| 4-4 | 4-4 | 1/11/1/1 | 6 | 2 | 2 | 8.8 | Comp. |
| 4-5 | 4-1 | 5 | 21 | 3 | 3 | 8.7 | Comp. |
| 4-6 | 4-2 | 1/7 | 21 | 3 | 3 | 7.2 | Inv. |
| 4-7 | 4-3 | 1/11/1/1 | 21 | 3 | 3 | 7.1 | Inv. |
| 4-8 | 4-4 | 5 | 21 | 2 | 2 | 7.5 | Comp. |
| 4-9 | 4-1 | 1/7 | 28 | 2 | 2 | 9.4 | Comp. |
| 4-10 | 4-2 | | 28 | 2 | 2 | 9.2 | Comp. |
| 4-11 | 4-3 | | 28 | 2 | 2 | 8.8 | Comp. |
| 4-12 | 4-4 | | 28 | 2 | 2 | 8.7 | Comp. |

As can be seen from Table 5, it was proved that images obtained according to the invention exhibited little image non-uniformity, superior reproduction of each of YMC 2% halftone dots and little gray tone variation of the image formed of YMC halftone dots when the dot percentage was varied.

## Claims

**1.** A laser exposure apparatus comprising at least three laser light source units, each outputting a laser light having a wavelength different from the others; at least one of said laser light source units comprising plural laser oscillators each outputting a laser light having the same wavelength, wherein the ratio of an exposure output of a laser light source unit outputting a laser light having the shortest wavelength to that of a laser light source unit outputting a laser light having the longest wavelength units being from 1/10000 to 1/10 and the beam diameter of the laser light of the longest wavelength is from 3 to 25 μm on the exposed surface.

**2.** The laser exposure apparatus as claimed in claim 1, wherein said output ratio is from 1/10000 to 1/20.

**3.** The laser exposure apparatus as claimed in claim 1, wherein said beam diameter is from 6 to 22 μm.

**4.** The laser exposure apparatus as claimed in any one of claims 1 to 3, wherein said exposure apparatus further comprises a rotating drum, a silver halide light sensitive photographic material being wound around the rotating drum and subjected to laser exposure with rotating the drum.

**5.** The laser exposure apparatus as claimed in claim 4, wherein said silver halide photographic material comprises a support having thereon at least three silver halide emulsion layers each having a spectral sensitivity different from the others, at least one of the silver halide emulsion layers being simultaneously exposed to plural laser light beams outputted from said laser light source unit comprising plural laser oscillators.

**6.** An apparatus for forming an image by a process comprising:

(i) pulling out a silver halide light sensitive photographic material, which is wound in a roll form and contained in a roomlight cartridge, from the cartridge to cut to a prescribed length,
(ii) allowing the cut photographic material to be wound around a rotating drum and exposing the photographic material to laser light with rotating the drum in a laser exposure apparatus and
(iii) subjecting the exposed photographic material to processing to form a color image,

wherein said exposure apparatus comprises at least three laser light source units, each outputting a laser light having a different wavelength from the others; at least one of said laser light source units comprising plural laser oscillators outputting a laser light of the same wavelength, said image forming apparatus having a mechanism for reading information provided to the cartridge to automatically identify the kind of the photographic material or

determine exposure conditions or processing conditions.

**7.** The image forming apparatus as claimed in claim 6, wherein the photographic material is exposed to laser light so that the ratio of the exposure output of a laser light source unit outputting a laser light of the shortest wavelength to that of a laser light source unit outputting a laser light of the longest wavelength is from 1/10000 to 1/10.

**8.** The image forming apparatus as claimed in claims 6 or 7, wherein the photographic material is exposed to laser light so that the beam diameter of a laser light having the longest wavelength is from 3 to 25 μm on the exposed surface of the photographic material.

**9.** The image forming apparatus as claimed in any one of claims 6 to 8, wherein said silver halide photographic material comprises a support having thereon at least three silver halide emulsion layers each having a spectral sensitivity different from the others, at least one of the silver halide emulsion layers having a sensitivity maximum at a wavelength longer by from 2 to 10 nm than the wavelength of an exposing laser light.

**10.** The image forming apparatus as claimed in claim 9, wherein at least one of the silver halide emulsion layers is simultaneously exposed to plural laser light beams outputted from said laser light source unit comprising plural laser oscillators.

FIG. 1

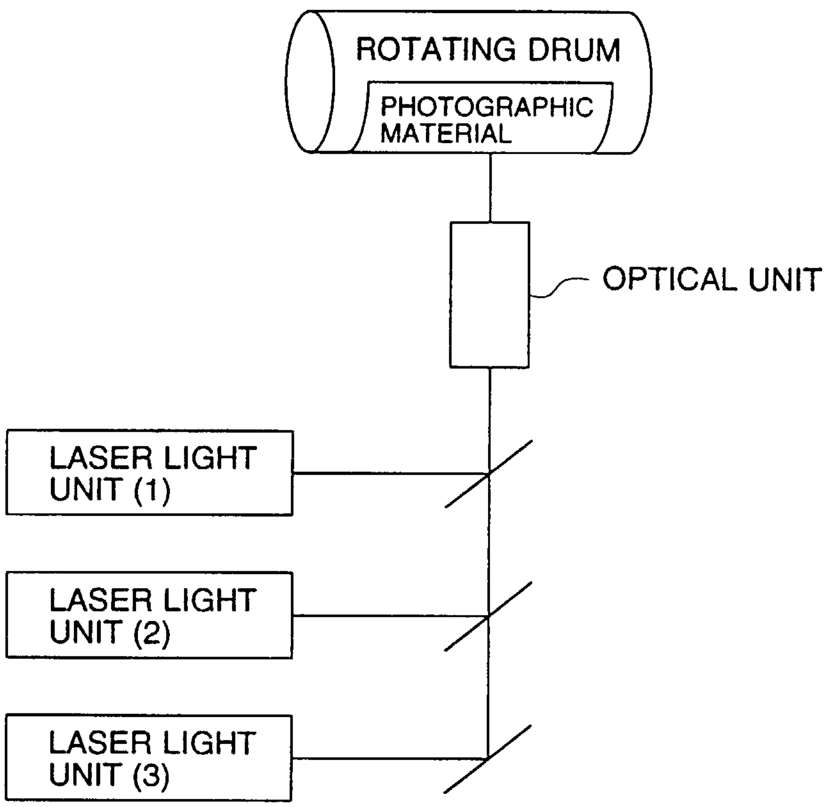
ROTATING DRUM
PHOTOGRAPHIC MATERIAL
OPTICAL UNIT
LASER LIGHT UNIT (1)
LASER LIGHT UNIT (2)
LASER LIGHT UNIT (3)

FIG. 2

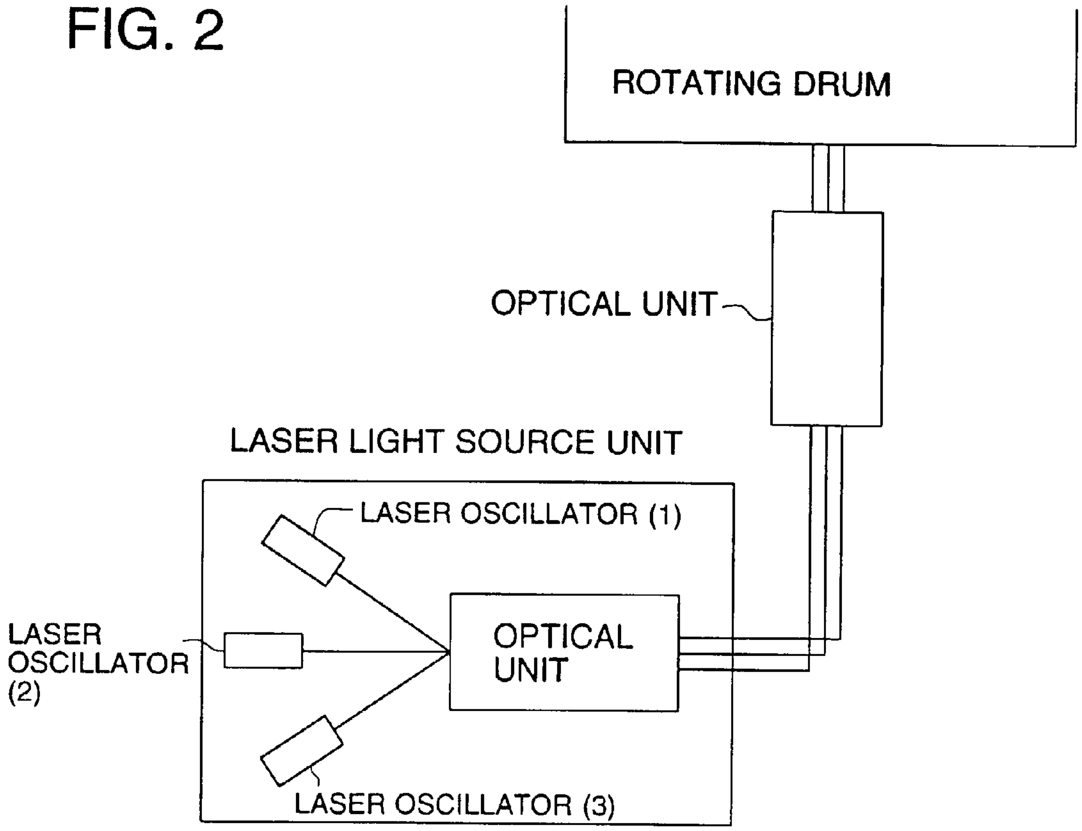
ROTATING DRUM
OPTICAL UNIT
LASER LIGHT SOURCE UNIT
LASER OSCILLATOR (1)
LASER OSCILLATOR (2)
OPTICAL UNIT
LASER OSCILLATOR (3)

FIG. 3

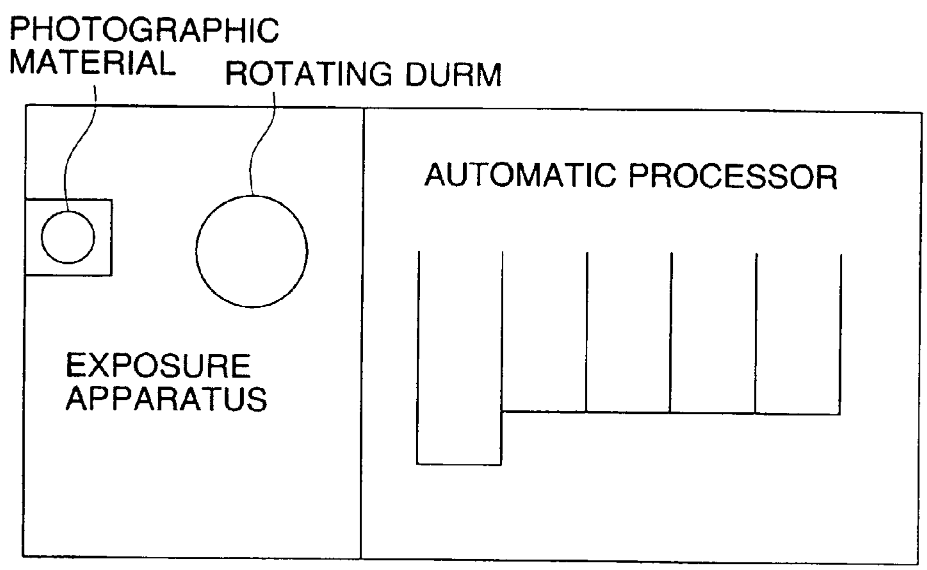
PHOTOGRAPHIC MATERIAL
ROTATING DURM
AUTOMATIC PROCESSOR
EXPOSURE APPARATUS